(19) Europäisches Patentamt
European Patent Office
Office européen des brevets

(11) **EP 4 502 268 A1**

(12) **EUROPEAN PATENT APPLICATION**
published in accordance with Art. 153(4) EPC

(43) Date of publication:
**05.02.2025 Bulletin 2025/06**

(21) Application number: **23779375.7**

(22) Date of filing: **09.03.2023**

(51) International Patent Classification (IPC):
**D06M 15/59** *(2006.01)*    **C08J 5/24** *(2006.01)*
**D06M 101/40** *(2006.01)*

(52) Cooperative Patent Classification (CPC):
**C08J 5/24; D06M 15/59**

(86) International application number:
**PCT/JP2023/009036**

(87) International publication number:
**WO 2023/189348 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022055755
30.03.2022 JP 2022055756**

(71) Applicant: **Toray Industries, Inc.
Tokyo 103-8666 (JP)**

(72) Inventors:
• **IMAI, Naokichi**
**Iyo-gun, Ehime 791-3193 (JP)**
• **NAKAYAMA, Yoshifumi**
**Iyo-gun, Ehime 791-3193 (JP)**
• **HONMA, Masato**
**Iyo-gun, Ehime 791-3193 (JP)**

(74) Representative: **Kador & Partner Part mbB
Corneliusstraße 15
80469 München (DE)**

(54) **CARBON FIBER SUBSTRATE, PREPREG, POROUS STRUCTURE, METHOD FOR MANUFACTURING SAME, PREFORM, FIBER-REINFORCED RESIN MOLDED BODY, SANDWICH STRUCTURE, AND AIRCRAFT MEMBER**

(57) The objective of the present invention is to obtain a carbon fiber substrate having high levels of both heat resistance and moldability, and to provide a prepreg and a porous structure having high heat resistance by using said carbon fiber substrate. The present invention is a carbon fiber substrate which includes a carbon fiber (A) and a resin composition (B) covering the surface of the carbon fiber (A), wherein the carbon fiber (A) forms a non-woven fabric. The tensile strength of the carbon fiber substrate after heating at 300°C for 5 minutes is at least 110% of the tensile strength of the carbon fiber substrate before the heating.

Figure 1

## Description

TECHNICAL FIELD

The present invention relates to a carbon fiber substrate and a prepreg.

BACKGROUND ART

A fiber-reinforced composite material obtained by using a reinforcing fiber substrate such as a carbon fiber substrate as a reinforcing material and impregnating pores thereof with a matrix resin has excellent mechanical characteristics such as strength and rigidity while being lightweight, and has been applied to many fields such as aerospace, automobiles, railway vehicles, ships, civil engineering and construction, electronic devices, industrial machines, and sporting goods. In particular, a prepreg using a carbon fiber non-woven fabric as a carbon fiber substrate and a porous structure obtained by expanding the prepreg are excellent in the mechanical characteristics, and are excellent in processing into a complicated shape such as a thin wall or a three-dimensional shape. In addition, a prepreg using a non-woven fabric in which reinforcing fibers are dispersed at a single yarn level and fibers are isotropically oriented as a reinforcing fiber substrate has isotropic mechanical characteristics, and thus does not require lamination that complements a direction in which strength is low as in quasi-isotropic lamination, and has a feature of high degree of freedom in designing a lamination configuration. Such a prepreg can be used as a single layer with thin walls, or can be used for molding as a preform in which a plurality of prepregs are freely stacked. Further, the prepreg can be molded into a fiber-reinforced resin molded body having no voids by heating and pressurization, or can be molded into a void body by heating and expansion. Therefore, the prepreg has an advantage of being excellent in processing into a complicated shape such as a thin wall or a three-dimensional shape. Patent Document 1 discloses a carbon fiber substrate provided with a binder and a fiber-reinforced composite material obtained by impregnating the carbon fiber substrate with a matrix resin.

On the other hand, when these applications are developed, compatibility between moldability and heat resistance is a continuous problem. In particular, heat resistance of matrix resins required in the market has been increased, and accordingly, the impregnation process has a high temperature and a high pressure, and development of a carbon fiber substrate having excellent moldability to withstand such a process has been a problem. Patent Documents 2 and 3 disclose carbon fibers covered with polyetherimide as a sizing agent as carbon fibers for obtaining a fiber-reinforced resin having high heat resistance.

PRIOR ART DOCUMENTS

PATENT DOCUMENTS

   Patent Document 1: International Publication No. 2010-013645
   Patent Document 2: Japanese Examined Patent Publication No. 02-002990
   Patent Document 3: National Publication of International Patent Application No. 2014-500912

SUMMARY OF THE INVENTION

PROBLEMS TO BE SOLVED BY THE INVENTION

Patent Document 1 does not disclose a carbon fiber substrate according to a high temperature and high pressure process associated with use of a matrix resin having a high melting point, and has a problem of further improvement in heat resistance and moldability. Patent Documents 2 and 3 are techniques related to a sizing agent, and are insufficient for impregnation and application to non-woven fabric-shaped reinforcing fibers.

An object of the present invention is to provide a carbon fiber substrate having both moldability and heat resistance.

SOLUTIONS TO THE PROBLEMS

The present invention provides a carbon fiber substrate including a carbon fiber (A) and a resin composition (B) covering a surface of the carbon fiber (A), in which the carbon fiber (A) forms a non-woven fabric, and a tensile strength after heating at 300°C for 5 minutes is 110% or more of that before the heating.

The present invention also provides a prepreg obtained by impregnating a substrate derived from the carbon fiber substrate of the present invention with a matrix resin (C) (first aspect).

The present invention also provides a prepreg obtained by impregnating a matrix resin (C) into a substrate formed of a carbon fiber (A) and a binder resin composition (D),

in which the carbon fibers (A) are discontinuous fibers and form a non-woven fabric,
the binder resin composition (D) has a glass transition temperature of 120°C or higher and 450°C or lower,
a melting point of the matrix resin (C) is 250°C or higher and 400°C or lower,
the binder resin composition (D) is present at an interface between the carbon fiber (A) and the matrix resin (C), and
the prepreg satisfies the following conditions (i) and (ii) (second aspect):

(i) A minimum value of a tensile strength is 100 MPa or more.
(ii) A thickness variation at 400°C is 10% or less.

The present invention also provides a porous structure formed of the prepreg of the present invention.

The present invention also provides a method for manufacturing the porous structure of the present invention, including a first step of melting and expanding the matrix resin (C) and a second step of solidifying the matrix resin (C).

The present invention also provides a preform including the prepreg of the present invention as a lamination unit.

The present invention also provides a fiber-reinforced resin molded body obtained by molding the preform of the present invention by heating and pressurizing the preform.

The present invention also provides a fiber-reinforced resin molded body having voids, which is obtained by thermally expanding the preform of the present invention.

The present invention also provides a sandwich structure obtained by integrally sandwiching the fiber-reinforced resin molded body of the present invention as a core member between a pair of skin members.

The present invention also provides an aircraft member including the prepreg of the present invention, the porous structure of the present invention, the fiber-reinforced resin molded body of the present invention, or the sandwich structure of the present invention.

EFFECTS OF THE INVENTION

The carbon fiber substrate of the present invention is excellent in shapability to flexibly follow a mold in the initial stage of molding of a fiber-reinforced resin. In addition, it is possible to prevent molding defects such as breakage under a high-temperature and high-pressure process in which a matrix resin is impregnated. Furthermore, the carbon fiber substrate of the present invention can maintain a dispersed state of carbon fibers, and can easily provide a prepreg, a fiber-reinforced resin, and a porous structure excellent in heat resistance.

The prepreg of the present invention can achieve both heat resistance and isotropy of mechanical characteristics.

BRIEF DESCRIPTION OF THE DRAWINGS

Fig. 1 is a schematic view illustrating one embodiment of a carbon fiber substrate of the present invention. The view on the right side is an enlarged view illustrating a state of a carbon fiber (A) and a resin composition (B) attached to the surface thereof.
Fig. 2 is a schematic view illustrating one embodiment of a prepreg of the present invention together with an enlarged view of an internal cross section thereof.
Fig. 3 is a schematic view illustrating one embodiment of a porous structure of the present invention together with an enlarged image of an internal cross section thereof.
Fig. 4 is a schematic view for explaining a pore diameter of the porous structure.

EMBODIMENTS OF THE INVENTION

In the present invention, a thickness direction of the prepreg is referred to as an out-of-plane direction, and a direction orthogonal to the out-of-plane direction is referred to as an in-plane direction.

[Carbon Fiber Substrate]

A carbon fiber substrate of the present invention includes a carbon fiber (A) and a resin composition (B) covering the surface of the carbon fiber (A).

The carbon fiber (A) is excellent in mechanical characteristics and lightweight properties among those known as reinforcing fibers. Examples of the carbon fiber (A) include PAN-based, rayon-based, and pitch-based carbon fibers, and the PAN-based carbon fiber is preferable from the viewpoint of mechanical characteristics and economic efficiency. Among the PAN-based carbon fibers, it is preferable to use a carbon fiber having an elastic modulus of 200 GPa or more from the viewpoint of the mechanical characteristics of the fiber-reinforced substrate obtained. From the viewpoint of cost, it is also preferable to use recycled carbon fibers.

The carbon fiber (A) preferably has a thermal mass reduction rate at 400°C of 1% by mass or less. The thermal mass reduction rate is more preferably 0% by mass or more and 1% by mass or less. In the present invention, the carbon fiber (A) is preferably a discontinuous fiber as described later, and the carbon fiber (A) is bonded with the resin composition (B) to form a carbon fiber substrate. If the heat resistance of the carbon fiber (A) is low, the decomposition gas peels off an interface between the carbon fiber (A) and the resin composition (B), and a binding effect may not be sufficient. Therefore, the thermal mass reduction rate of the carbon fiber (A) is preferably in the above range. The thermal mass reduction rate can be determined by the following equation.

$$\text{Thermal mass reduction rate (\% by mass)} = [(M1 - M2)/M1] \times 100$$

Here, M1 is a sample mass (mg) after isothermal holding at 30°C for 10 minutes, and M2 is a sample mass (mg) when the temperature is then raised at 10°C/min to reach 400°C.

The diameter of the carbon fiber (A) is preferably 1 to 20 $\mu$m, more preferably 3 to 10 $\mu$m, and still more preferably 6 to 8 $\mu$m. Within such a range, the carbon fiber is excellent in dispersibility, and it is possible to effectively achieve both the height and mechanical characteristics of the porosity as a carbon fiber substrate. In addition, the prepreg obtained from the carbon fiber substrate can have more excellent mechanical characteristics.

In the present invention, the carbon fibers (A) constituting the non-woven fabric form are preferably discontinuous fibers, and the number average fiber length is more preferably 0.1 to 100 mm, still more preferably 1 to 20 mm, and particularly preferably 3 to 10 mm. Within such a range, it is easy to widen an interval between fibers in a network structure in the non-woven fabric form, and it is easy to control the formation of pores. A number average fiber length of the carbon fibers (A) can be calculated by randomly selecting 400 carbon fibers (A), measuring their fiber lengths with an optical microscope, and dividing the total fiber length by the number of measurements.

The carbon fiber (A) preferably contains 50% by mass or more of fibers having a fiber length of 2 mm or more and 10 mm or less, more preferably 3 mm or more and 8 mm or less, and still more preferably 5 mm or more and 7 mm or less. The content is more preferably 80% by mass or more and 100% by mass or less, and still more preferably 100% by mass. Within such a range, the carbon fibers (A) constituting the network in a non-woven fabric form are dispersed, and formation of pores and isotropic fiber orientation are easily controlled.

Examples of a method for collecting a sample in the method for measuring a fiber length include a method in which a resin component is removed by a dissolution method using an organic solvent, a melting method in which a thin sample for observation is prepared by heating and melting the resin component, or a burning method using an electric furnace, and the remaining carbon fibers (A) are separated by filtration and then measured by an optical microscope.

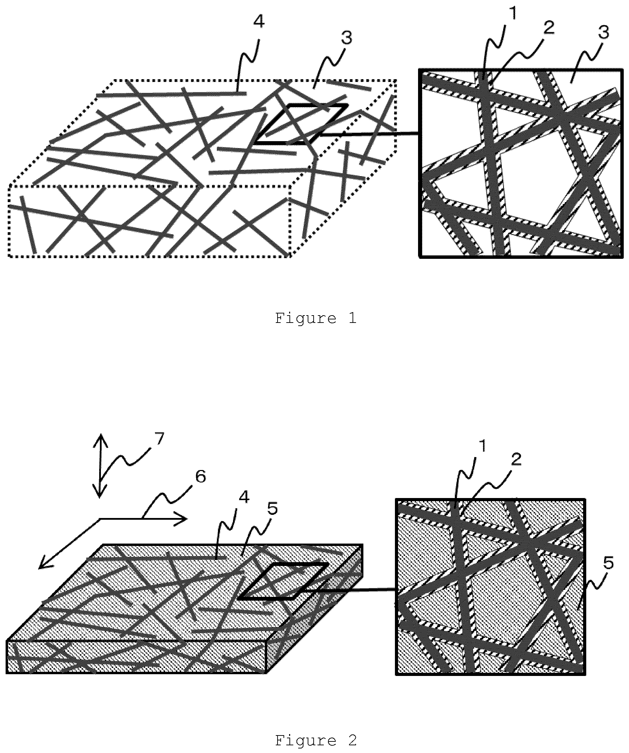

The carbon fibers (A) form a non-woven fabric. As a result, it is possible to design a fiber substrate having a higher porosity than that of a fiber substrate having a woven fabric shape or oriented in one direction, and this has an advantage that the amount of impregnation of the matrix resin (C) described later can be increased. In addition, since the carbon fibers (A) form a non-woven fabric, even if by-product gas is generated when the resin composition (B) described later reacts, the by-product gas can be easily exhausted, and a hard carbon fiber substrate can be obtained. In Fig. 1, carbon fibers (A)1 are randomly dispersed as discontinuous fibers in a non-woven fabric form having a network structure, thereby forming a fine pore 3 between the fibers.

In general, the non-woven fabric form has lower strength as a carbon fiber substrate as compared with a woven fabric shape or a fiber substrate oriented in one direction, and there is an increased risk that the non-woven fabric form cannot withstand the impregnation pressure and is broken during melt impregnation of the matrix resin (C). Therefore, in the present invention, carbon fibers excellent in the mechanical characteristics are used. The carbon fiber (A) in the non-woven fabric form can be manufactured by, for example, an air-laid method, a carding method, and a papermaking method.

The mass ratio of the carbon fibers (A) in the carbon fiber substrate is preferably 90% or more and 97% or less. When the mass ratio is 90% or more, the strength as a carbon fiber substrate is sufficient, and molding defects such as breakage at the time of impregnation with the matrix resin (C) can be effectively prevented. When the mass ratio is 97% or less, more preferably 96% or less, and still more preferably 92% or less, the carbon fibers (A) can be prevented from converging into a fiber bundle shape, and the carbon fibers (A) can be prevented from being insufficiently dispersed in the prepreg obtained from the carbon fiber substrate.

The resin composition (B) has a function of retaining a non-woven fabric form or protecting the carbon fiber (A) from abrasion by binding a network structure of the carbon fiber (A) at a contact point thereof. In the right diagram of Fig. 1, a resin composition (B)2 covers the surface of the carbon fiber (A) to constitute a carbon fiber (A)4 covered with the resin composition (B). The carbon fiber substrate of the present invention bonded with the resin composition (B) can be formed into a prepreg while maintaining a network structure such as fiber orientation and dispersibility of the carbon fibers (A).

From the viewpoint of retaining the network structure of the carbon fibers (A), the resin composition (B) covers preferably 50% to 100%, more preferably 80% to 100%, and still more preferably 100% of the surface area of the total carbon fibers (A) constituting the carbon fiber substrate. In order to achieve such a state, it is preferable to pass through a step of forming the carbon fibers (A) into an aggregate like a non-woven fabric and immersing the aggregate in the resin composition (B).

The coverage of the resin composition (B) can be determined from a surface oxygen concentration (O/C) by X-ray photoelectron spectroscopy using the following equation as described in examples below.

(Coverage of resin composition (B)) = {(O/C of carbon fiber (A)) - (O/C of carbon fiber substrate) }/{ (O/C of carbon fiber (A)) - (O/C of resin composition (B))} $\times$ 100 (%).

The carbon fiber substrate of the present invention preferably has a porosity of 50% to 99%. The porosity of the carbon fiber substrate is more preferably 80% to 99%, still more preferably 90% to 99%. By setting the porosity to such a range, the impregnation amount of the matrix resin (C) can be designed to be large. In addition, the carbon fiber substrate of the present invention having excellent mechanical characteristics at a high temperature can prevent molding defects such as breakage of the carbon fiber substrate during a melt impregnation process of the matrix resin (C) even when the porosity is high. The porosity of the carbon fiber substrate is a volume ratio of pores in the carbon fiber substrate, and can be determined by the following equation.

(Porosity of carbon fiber substrate) = {(thickness [m] of carbon fiber substrate) - (basis weight of carbon fiber substrate [g/m$^2$])/(density of constituent components of carbon fiber substrate [g/m$^3$])}/(thickness of carbon fiber substrate [m]) $\times$ 100 [%].

In the carbon fiber substrate of the present invention, the tensile strength after a heat treatment at 300°C for 5 minutes is 110% or more of that before the heating. The tensile strength after the heat treatment with respect to the tensile strength before heating is preferably 200% or more and 600% or less, and more preferably 300% or more and 500% or less. As described later, the carbon fiber substrate of the present invention can be processed into a prepreg by being melt-impregnated with the matrix resin (C). In order to form a composite with the matrix resin (C), the pores of the carbon fiber substrate are impregnated with the matrix resin (C) heated and melted at a high temperature and a high pressure, but in such an impregnation process, a defect such as breakage of the carbon fiber substrate may occur. On the other hand, when a hard carbon fiber substrate is used before such an impregnation process, elastic repulsion or breakage may occur when the carbon fiber substrate is shaped to follow the shape of a mold or the like. Therefore, at the start of the impregnation process, it is possible to prevent molding defects such as breakage even in the high temperature and high pressure impregnation process of the matrix resin (C) by having a property of being soft and hard so as not to be broken even under pressure during impregnation while having shapability following a mold or the like. The change in the tensile strength before and after the heat treatment is determined by measuring, in one direction of the carbon fiber substrate, the tensile strength (Ta) measured at room temperature after heating at 300°C for 5 minutes and the tensile strength (Tao) at room temperature of the carbon fiber substrate that was not subjected to the heat treatment in the same direction, and determining the change by the following equation.

Tensile strength after heat treatment to tensile strength before heating (%) = (Ta/Tao) $\times$ 100

The tensile strength [N/cm] of the carbon fiber substrate in the present specification is a value determined by cutting out a test piece having a width of 50 mm and a length of 150 mm from the carbon fiber substrate, carrying a length of 50 mm at each of both ends, subjecting the remaining portion having a length of 50 mm at the central portion to a tensile test at a test speed of 3 m/min in a room temperature environment, and dividing the obtained maximum point load by the width of the test piece.

The carbon fiber substrate of the present invention is preferably excellent in isotropy at the time of impregnation with the matrix resin, that is, the strength of the carbon fiber substrate in a certain direction and the strength in a direction orthogonal thereto are close to each other. When the anisotropy is large, the risk of breakage due to concentration in a direction in which the tensile strength is weak during impregnation with the matrix resin (C) increases. As an index of such isotropy, the tensile strength ratio (Ta/Tb) after heat treatment determined by dividing Ta by the tensile strength (Tb) measured at room temperature after heat treatment at 300°C for 5 minutes in the direction orthogonal to the test direction is preferably 0.6 to 1.7. The tensile strength ratio (Ta/Tb) after the heat treatment is more preferably 0.8 to 1.3, and is still more preferably 0.9 to 1.1. The absolute values of Ta and Tb are preferably 25 N/cm or more and 100 N/cm or less, and more preferably 25 N/cm or more and 45 N/cm or less. Within such a range, a tough carbon fiber substrate that is not broken even during melt impregnation of the matrix resin (C) is obtained.

In addition, the carbon fiber substrate of the present invention is preferably excellent in the isotropy even before impregnation of the matrix resin from the viewpoint of preventing breakage in the shaping step of causing the carbon fiber substrate to follow the mold. As such an index, it is preferable that the tensile strength ratio (Tao/Tbo) before the heat treatment obtained by dividing the Tao, which is the tensile strength before the heat treatment, by the tensile strength (Tbo) measured at room temperature in the direction orthogonal to the test direction is 0.6 to 1.7. The tensile strength ratio (Tao/Tbo) before the heat treatment is more preferably 0.8 to 1.3, and still more preferably 0.8 to 1.1. The absolute values of Tao and Tbo are preferably 8 N/cm or more and 25 N/cm or less, and more preferably 8 N/cm or more and 15 N/cm or less. Within such a range, a flexible carbon fiber substrate having high followability to a mold is obtained.

In the present invention, the resin composition (B) is preferably a resin composition that performs a dehydration condensation reaction in which the thermal mass reduction rate of the following equation (1) is 5% to 50% by mass.

Thermal mass reduction rate (% by mass) = [(W1 - W2)/W1] $\times$ 100 $\cdots$ (1)            (1)

Here, W1 is the sample mass (mg) after the temperature is raised from room temperature to 100°C at 10°C/min and further held isothermally for 30 minutes, and W2 is the sample mass (mg) when the temperature is then raised at 10°C/min and reaches 250°C.

The resin composition (B) has an action of hardening the carbon fiber substrate by a dehydration condensation reaction accompanying heating. When the carbon fibers (A) are in the non-woven fabric form, the by-product gas generated by the dehydration condensation reaction of the resin composition (B) can be easily discharged. By setting the thermal mass reduction rate of the resin composition (B) within such a range, the hardening of the resin composition (B) and the exhaust of the by-product gas can be achieved in a well-balanced manner during the impregnation of the matrix resin (C) into the carbon fiber substrate. The mass of the generated gas during heating and the components thereof can be analyzed by a thermogravimetric mass spectrometer (TG-MS). The thermal mass reduction rate accompanying the dehydration condensation reaction of the resin composition (B) is more preferably 5% to 30% by mass, still more preferably 5% to 20% by mass.

When the resin composition (B) is subjected to the dehydration condensation reaction, water is contained in the by-product gas to be generated, but 5% or more of the by-product gas is preferably water, more preferably 50% or more, and still more preferably 100%. When the by-product gas contains a large amount of water, the effect of preventing excessive temperature rise due to pressurization at the time of impregnation with the matrix resin (C) and improving releasability from the mold can be obtained.

The dehydration condensation reaction of the resin composition (B) as described above is more specifically preferably an imidization reaction, an oxazolation reaction, or an imidazolation reaction from the viewpoint of the heat resistance of the resulting reactant. In a case of a thermal decomposition reaction such as oxidation or radical cleavage accompanied by mass reduction, the heat resistance and mechanical strength of the resin composition (B) may decrease, leading to molding defects in which the carbon fiber substrate is broken.

From such a viewpoint, the resin composition (B) preferably contains at least one selected from a polyamic acid, a polyamic acid salt, a polyamic acid ester, a polyhydroxyamide, and a polyaminoamide. The polyamic acid, the polyamic acid salt, and the polyamic acid ester are precursors to be a polyimide resin by an imidization reaction, the polyhydroxyamide is a precursor to be a polybenzoxazole resin by an oxazolation reaction, and the polyaminoamide is a precursor to be a polybenzimidazole resin by an imidazolation reaction.

The polyamic acid can be synthesized by reacting tetracarboxylic dianhydride with an equimolar diamine compound. Specific examples of the synthesis method include a method in which a diamine compound is dissolved in a solvent such as NMP, and a tetracarboxylic dianhydride is added while stirring at room temperature. In this method, a carboxylic acid anhydride, which is a functional group of a tetracarboxylic dianhydride, and an amino group, which is a functional group of a diamine compound, undergo a ring-opening polyaddition reaction in an equimolar amount, that is, on a one-to-one basis, thereby forming a high molecular weight compound, and at this time, a carboxyl group derived from the carboxylic acid anhydride is produced as a by-product. The polyamic acid salt is a salt obtained by neutralizing the carboxyl group produced as a by-product with a basic compound. Examples of the basic compound used for neutralization here include ammonia, monoalkylamine, dialkylamine, trialkylamine, and tetraalkylammonium hydroxide.

The polyamic acid ester can be synthesized by reacting the above-described carboxyl group by-produced in the polyamic acid with an alcohol to be esterified. Examples of the alcohol used here include methanol, ethanol, 1-propanol, and 2-propanol. This is preferable because hydrolysis of the polyamic acid can be reduced by esterification.

The polyamic acid, the polyamic acid salt, and the polyamic acid ester are cyclized by intramolecular imidization reaction by heating, and are changed to polyimide while generating by-product gas. The resin composition (B) may be a mixture of a polyamic acid, a polyamic acid salt, and a polyamic acid ester.

From the viewpoint of being able to be used as an aqueous solution having high water solubility and a relatively low equipment load, the resin composition (B) is preferably a polyamic acid salt.

Examples of the tetracarboxylic dianhydride include 3,3',4,4'-biphenyltetracarboxylic dianhydride <s-BPDA>, 2,3,3',4'-biphenyltetracarboxylic dianhydride <a-BPDA>, 2,2',3,3'-biphenyltetracarboxylic dianhydride <i-BPDA>, pyromellitic dianhydride <PMDA>, 3,3',4,4'-benzophenonetetracarboxylic dianhydride <BTDA>, 4,4'-(4,4'-isopropylidenediphenoxy) bis(phthalic anhydride), 4,4'-oxydiphthalic anhydride, 2,3,6,7-naphthalenetetracarboxylic dianhydride, and 1,4,5,8-naphthalenetetracarboxylic dianhydride <NTDA>, and 2,2-bis(3,4-dicarboxyphenyl)-1,1,1,3,3,3-hexafluoropropane dianhydride <6FDA>. Among them, 4,4'-(4,4'-isopropylidenediphenoxy) bis(phthalic anhydride) is preferable from the viewpoint of both the melt processability of the polyamic acid obtained and the heat resistance of the carbon fiber substrate and the adhesion with the matrix resin (C).

Examples of the diamine compound include phenylenediamines such as p-phenylenediamine <PPD> and m-phenylenediamine <MPD>, diaminobenzoic acids such as 3,5-diaminobenzoic acid, diaminodiphenyl ethers such as 4,4'-diaminodiphenyl ether <ODA>, 3,4'-diaminodiphenyl ether, and 3,3'-diaminodiphenyl ether, diaminodiphenyl methanes such as 4,4'-diaminodiphenyl methane, 3,3'-diaminodiphenyl methane, 3,3'-dichloro-4,4'-diaminodiphenyl methane, and 3,3'-dimethyl-4,4'-diaminodiphenyl methane, and diaminobenzophenones such as 4,4'-diaminobenzophenone. Among them, phenylenediamines are preferable, and m-phenylenediamine is more preferable from the viewpoint of the coatability of the resulting polyamic acid and the balance between heat resistance and coatability onto the carbon fiber (A).

The polyhydroxyamide is a precursor of a polybenzoxazole resin, and is a prepolymer in which an aromatic diamine diol having an amino group and a hydroxyl group on adjacent carbon atoms in an aromatic ring and a dicarboxylic acid derivative such as an aromatic dicarboxylic acid, an aromatic dicarboxylic acid ester, an aromatic dicarboxylic acid dihalogen compound, or a heterocyclic dicarboxylic acid are polycondensed to form an amide bond. Specific examples of the synthesis method include a method in which an aromatic diamine diol and a dicarboxylic acid derivative are mixed at a molar ratio of 1:1 in a solvent such as NMP, and the mixture is stirred at 120°C for 12 hours. In the polyhydroxyamide, adjacent hydroxyl groups and amide bonds are condensed by heat treatment at 200°C to 400°C to form an oxazole ring, and the polyhydroxyamide reacts with a polybenzoxazole resin having an oxazole ring and an aromatic ring in the molecule. Examples of the aromatic diamine diol include 3,3'-dihydroxybenzidine, 3,3'-diamino-4,4'-dihydroxybiphenyl, 4,6-diaminoresorcinol, 2,5-diaminohydroquinone, 4,4'-diamino-3,3'-dihydroxydiphenyl sulfone, 3,3'-diamino-4,4'-dihydroxydiphenylsulfone, 4,4'-diamino-3,3'-dihydroxydiphenyl ether, 3,3'-diamino-4,4'-dihydroxydiphenyl ether, 4,4'-diamino-3,3'-dihydroxydiphenylmethane, 3,3'-diamino-4,4'-dihydroxydiphenylmethane, 2,2-bis(3-amino-4-hydroxyphenyl)-propane, 2,2-bis(3-amino-4-hydroxyphenyl)-hexafluoropropane, and hydrochloride thereof. Examples of the dicarboxylic acid derivative include isophthalic acid.

The polyaminoamide is a precursor of a polybenzimidazole resin, and is a prepolymer in which a diamine component of an aromatic tetraamine compound and a dicarboxylic acid derivative such as an aromatic dicarboxylic acid, an aromatic dicarboxylic acid ester, an aromatic dicarboxylic acid dihalide, or a heterocyclic dicarboxylic acid are polycondensed to form an amide bond. Specific examples of the synthesis method include a method in which an aromatic tetraamine compound and a dicarboxylic acid derivative are mixed in a solvent such as NMP at a molar ratio of 1:1 and stirred at 120°C for 12 hours. In the polyaminoamide, adjacent amino groups and amide bonds are condensed by heat treatment at 200°C to 400°C to form an imidazole ring, and the polyaminoamide reacts with a polybenzimidazole resin having an imidazole ring and an aromatic ring in the molecule. Examples of the aromatic tetraamine compound include 3,3'-diaminobenzidine, 1,2,4,5-tetra-aminobenzene, 2,3,5,6-tetra-aminopyridine, 3,3',4,4'-tetra-aminodiphenyl sulfone, 3,3',4,4'-tetra-aminodiphenyl ether, 3,3',4,4'-tetra-aminodiphenyl methane, 3,3',4,4'-tetra-aminodiphenyl dimethyl methane, and hydrochloride salts thereof. Examples of the dicarboxylic acid derivative include isophthalic acid. A polybenzimidazole resin obtained by imidazolation of a polyaminoamide has a high glass transition temperature of 400°C or higher, and is preferable from the viewpoint of excellent heat resistance.

The resin composition (B) preferably contains at least one selected from a polyamic acid, a polyamic acid salt, a polyamic acid ester, a polyhydroxyamide, and a polyaminoamide in a total amount of 50% by mass or more, and more preferably 80% by mass or more. More preferably, the resin composition (B) is formed of only at least one selected from a polyamic acid, a polyamic acid salt, a polyamic acid ester, a polyhydroxyamide, and a polyaminoamide. Within such a range, the resin composition (B) adheres to the carbon fiber (A), and a carbon fiber substrate excellent in the heat resistance and mechanical strength is obtained.

The resin composition (B) may appropriately contain other additives as long as the object of the present invention is not impaired depending on the application. Examples of such other additives include flame retardants, conductivity imparting agents, antioxidants, antibacterial agents, insect repellents, mold release agents, antistatic agents, plasticizers, lubricants, coloring agents, pigments, dyes, and antifoaming agents.

In the carbon fiber substrate of the present invention, the amount of the resin composition (B) is preferably 0.5 to 30 parts by mass based on 100 parts by mass of the carbon fiber (A). When the amount of the resin composition (B) is 0.5 parts by mass or more, more preferably 1 part by mass or more, still more preferably 3 parts by mass or more, further still more preferably 5 parts by mass or more, and even still more preferably 8 parts by mass or more based on 100 parts by mass of the carbon fibers (A), the resin composition (B) is excellent in handleability as a carbon fiber substrate, and can be made difficult to break during transportation or the like. When the amount of the resin composition (B) is 30 parts by mass or less, more preferably 15 parts by mass or less, and still more preferably 10 parts by mass or less based on 100 parts by mass of the carbon fibers (A), pores can be sufficiently formed, and impregnation of the matrix resin (C) can be facilitated.

The resin composition (B) preferably covers 50% or more of the surface area of the carbon fiber (A). When the coverage is 50% or more, more preferably 80% or more, and still more preferably 100%, an interface in which the carbon fibers (A) and the matrix resin (C) are firmly adhered can be effectively formed in the prepreg of the present invention described later.

In order to obtain this covered state, it is preferable that in the step of producing the carbon fiber substrate, a step of immersing a non-woven fabric formed of the carbon fibers (A) in the resin composition (B) is performed.

The coverage of the resin composition (B) can be determined from a surface oxygen concentration (O/C) by X-ray photoelectron spectroscopy using the following equation as described in examples below.

(Coverage of resin composition (B)) (%) = {(O/C of carbon fiber (A) - (O/C of carbon fiber substrate) }/{ (O/C of carbon fiber (A)) - (O/C of resin composition (B))} $\times$ 100.

By using the carbon fiber substrate of the present invention, molding defects such as breakage during impregnation with the matrix resin (C) can be prevented, and a prepreg having an excellent expansion rate can be obtained. In particular, the carbon fiber substrate of the present invention can be impregnated while preventing molding defects such as breakage even with a highly heatresistant matrix resin (C) that requires an impregnation process at high temperature and high pressure. This effect makes it possible to easily obtain a porous structure which uses the matrix resin (C) having high heat resistance, is excellent in the heat resistance, and is further lightweight.

[Prepreg]

The carbon fiber substrate of the present invention is suitable as a substrate of a prepreg. That is, in the first aspect of the prepreg of the present invention, the substrate derived from the carbon fiber substrate of the present invention is impregnated with the matrix resin (C).

A second aspect of the prepreg of the present invention is obtained by impregnating a matrix resin (C) into a substrate formed of the carbon fibers (A) and the binder resin composition (D).

Details of the carbon fibers (A) in the second aspect are common to the details of the carbon fiber (A) in the first aspect, that is, the carbon fiber substrate of the present invention.

Details of the matrix resin (C) in the first aspect and the matrix resin (C) in the second aspect are also common.

The binder resin composition (D) in the second aspect is preferably derived from the one described as the resin composition (B). The binder resin composition that is or is derived from the resin composition (B) in the first aspect and the binder resin composition (D) in the second aspect are also collectively and simply referred to as "binder resin composition". Hereinafter, unless otherwise specified, the distinction between the first aspect and the second aspect is common to both aspects.

In Fig. 2, fine pores are formed inside a substrate formed of the carbon fibers (A)1 and the binder resin composition 2, and the pores are impregnated with a matrix resin (C)5 to form a prepreg. In the prepreg, the carbon fibers (A)1 are randomly dispersed and exist in a non-woven fabric form forming a network structure, and fine spaces between the fibers are filled with the matrix resin (C)5. The binder resin composition 2 is present at the interface between the carbon fiber (A)1 and the matrix resin (C)5.

The mass ratio of the carbon fibers (A) in the prepreg of the present invention is preferably 1% or more and 50% or less, more preferably 5% or more and 40% or less, and still more preferably 10% or more and 30% or less. If it is smaller than such a range, the reinforcing effect of the carbon fiber substrate on the prepreg may be insufficient. If it is larger than such a range, the carbon fiber substrate may be broken during impregnation with the matrix resin (C).

Examples of the resin contained in the binder resin composition include a phenol resin, a urea resin, a melamine resin, a polyimide resin, a polybenzoxazole resin, a polybenzimidazole resin, a bismaleimide resin, a benzoxazine resin, and a cyanate ester resin, and a copolymer and a modified product thereof, and a resin obtained by blending two or more thereof may be used. Among them, a polyimide resin, a polybenzoxazole resin, and a polybenzimidazole resin are preferable from the viewpoint of the heat resistance. Furthermore, from the viewpoint of processability to the carbon fiber substrate, a polyimide resin is more preferable, and among the polyimide resins, a polyetherimide resin having an ether group and an imide group is particularly preferable.

In addition, the binder resin composition is preferably a composition containing a polymer having at least one structure selected from an etherimide skeleton, a benzoxazole skeleton, a benzimidazole skeleton, a benzoxazine skeleton, and a cyanate ester skeleton or a derivative thereof. By containing such a compound, the binder resin composition is excellent in heat resistance, and further excellent in adhesion to the carbon fiber (A) and the matrix resin (C). The etherimide skeleton means having an ether group and an imide group, respectively, and examples of a polymer or a derivative thereof having the etherimide skeleton include a polyetherimide resin. The benzoxazole skeleton has a structure in which an aromatic ring and an oxazole ring are bonded to each other by sharing one side, and examples of a polymer having the structure or a derivative thereof include a polybenzoxazole resin. The benzimidazole skeleton has a structure in which an aromatic ring and an imidazole ring are bonded to each other while sharing one side, and examples of a polymer having the benzimidazole skeleton or a derivative thereof include a polybenzimidazole resin. Examples of the polymer having a benzoxazine skeleton or a derivative thereof include benzoxazine resins. Examples of the polymer having a cyanate ester skeleton or a derivative thereof include cyanate ester resins. Furthermore, from the viewpoint of the heat resistance and processability into a carbon fiber substrate, the binder resin composition more preferably contains a polymer having an etherimide skeleton or a derivative thereof.

The glass transition temperature of the binder resin composition in the first aspect is preferably 120°C or higher and 450°C or lower. The glass transition temperature of the binder resin composition (D) in the second aspect is 120°C or higher and 450°C or lower. The glass transition temperature of the binder resin composition is more preferably 200°C or higher and lower than 400°C, and still more preferably 200°C or higher and 350°C or lower. The binder resin composition has a function of retaining a non-woven fabric form by binding the network structure of the carbon fibers (A) at the contact points when impregnated with the matrix resin (C), and is present at the interface between the carbon fibers (A) and the matrix resin (C) inside the obtained prepreg. When the glass transition temperature of the binder resin composition is within the above range, the form of the carbon fiber substrate is retained as a solid at the initial stage of impregnation of the matrix resin (C), and then the carbon fiber substrate is gradually softened to be compatible with the molten matrix resin (C), so that an interface in which the carbon fibers (A) and the matrix resin (C) are firmly adhered to each other can be formed.

The binder resin composition preferably has a thermal mass reduction rate at 400°C of 5% by mass or less. The binder resin composition has a function of retaining a non-woven fabric form by binding the network structure of the carbon fibers (A) at the contact points when impregnated with the matrix resin (C), and is present at the interface between the carbon fibers (A) and the matrix resin (C) inside the obtained prepreg. When the thermal mass reduction rate of the binder resin composition at 400°C is 5% by mass or less, preferably 0% by mass or more and 3% by mass or less, the binder resin composition has high heat resistance and is hardly thermally decomposed, and it is possible to prevent the decomposition gas from peeling off the interface between the carbon fiber (A) and the binder resin composition to reduce the binding effect. This thermal mass reduction rate can be determined by the following equation.

$$\text{Thermal mass reduction rate (\% by mass)} = [(M1-M2)/M1] \times 100$$

Here, M1 is a sample mass (mg) after isothermal holding at 30°C for 10 minutes, and M2 is a sample mass (mg) when the temperature is then raised at 10°C/min to reach 400°C.

The binder resin composition preferably covers 50% or more of the surface area of the carbon fiber (A). When the coverage is 50% or more, more preferably 80% or more, and still more preferably 100%, an interface in which the carbon fibers (A) and the matrix resin (C) are firmly adhered can be effectively formed in the prepreg of the present invention described later.

In order to obtain this covered state, it is preferable that in the step of producing the carbon fiber substrate, a step of immersing a non-woven fabric formed of the carbon fibers (A) in the resin composition (B) is performed.

The coverage of the binder resin composition can be determined from the surface oxygen concentration (O/C) by X-ray photoelectron spectroscopy using the following equation as described in examples below.

$$\text{(Coverage of binder resin composition) (\%)} = \{(\text{O/C of carbon fiber (A)}) - (\text{O/C of carbon fiber substrate})\}/\{(\text{O/C of carbon fiber (A)}) - (\text{O/C of binder resin composition})\} \times 100.$$

In general, in a prepreg, a binder resin having a high glass transition temperature has a high temperature required for processing, and therefore it is difficult to cover the surface of reinforcing fibers with a high coverage. In the present invention, examples of a means for solving this problem include a method in which the resin composition (B) is applied as a precursor of the binder resin composition (D) onto the surface of the carbon fiber (A), and the binder resin composition (D) is thermally reacted to form the binder resin composition (D).

When a polyimide resin, a polybenzoxazole resin, or a polybenzimidazole resin is used as the binder resin composition (D), a method for applying the resin composition (B) as a precursor thereof to the carbon fibers (A) and then subjecting the carbon fibers (A) to a dehydration condensation reaction to form the binder resin composition (D) can also be preferably used from the viewpoint of heat resistance and processability.

The matrix resin (C) is preferably a thermoplastic resin. Examples of the thermoplastic resin include: polyester-based resins such as polyethylene terephthalate and polybutylene terephthalate; polyolefins such as polyethylene, polypropylene, polybutylene, and modified polypropylene; polyamides such as polyoxymethylene, polyamide 6, and polyamide 66; polycarbonate; polymethyl methacrylate; polyvinyl chloride; polyarylene sulfide such as polyphenylene sulfide; polyphenylene ether; modified polyphenylene ether; polysulfone; modified polysulfone; polyethersulfone; polyarylene ether ketones such as polyketone, polyether ketone, polyether ether ketone, and polyether ketone ketone; polyarylate; polyether nitrile; and phenoxy resin.

In addition, these thermoplastic resins may be copolymers or modified products, and/or blended resins of two or more thereof.

Among them, from the viewpoint of the balance between moldability and heat resistance, the matrix resin (C) more preferably contains at least one selected from the group consisting of polyether ketone, polyether ether ketone, polyether ketone ketone, and polycarbonate as a main component, still more preferably contains at least one selected from the group consisting of polyether ketone, polyether ether ketone, and polyether ketone ketone as a main component, and even more preferably contains polyether ketone ketone as a main component. Here, the main component means to occupy 50% by mass or more of the constituent components, is preferably 80% by mass or more and 100% by mass or less, and more preferably 100% by mass.

The melting point of the thermoplastic resin used as the matrix resin (C) in the first aspect is preferably 250°C or higher and 400°C or lower. The melting point of the thermoplastic resin used as the matrix resin (C) in the second aspect is 250°C or higher and 400°C or lower. When the melting point of the thermoplastic resin is 250°C or higher, more preferably 280°C or higher, and still more preferably 300°C or higher, a product obtained by processing the prepreg, such as the prepreg or a porous structure described later, can be effectively made excellent in the heat resistance. When the melting point of the thermoplastic resin is 400°C or lower, more preferably lower than 400°C, still more preferably 360°C or lower, and even more preferably 350°C or lower, the moldability of the prepreg can be effectively improved.

In addition, the glass transition temperature of the thermoplastic resin used as the matrix resin (C) is preferably 80°C or higher and 250°C or lower, more preferably 100°C or higher and 230°C or lower, and still more preferably 140°C or higher and 180°C or lower. When the glass transition temperature is 80°C or higher, preferably 100°C or higher, more preferably 120°C or higher, and still more preferably 140°C or higher, the heat resistance of the prepreg or the porous structure described later can be effectively improved. When the glass transition temperature is 250°C or lower, preferably 230°C or lower, more preferably 200°C or lower, and still more preferably 180°C or lower, compatibility with the binder resin composition is excellent, and the tensile strength of the obtained prepreg can be effectively improved.

It is also preferable that the matrix resin (C) contains, as a resin composition, other fillers and additives as appropriate within a range not impairing the object of the present invention depending on the application. Examples of such other fillers and additives include inorganic fillers, flame retardants, conductivity imparting agents, crystal nucleating agents, ultraviolet absorbers, antioxidants, damping agents, antibacterial agents, insect repellents, deodorants, coloring inhibitors, heat stabilizers, mold release agents, antistatic agents, plasticizers, lubricants, coloring agents, pigments, dyes, foaming agents, antifoaming agents, and coupling agents.

The amount of the matrix resin (C) in the prepreg is preferably 5 to 1000 parts by mass, more preferably 50 to 700 parts by mass, and still more preferably 100 to 500 parts by mass based on 100 parts by mass of the carbon fiber (A). If it is smaller than such a range, the mechanical characteristics of the prepreg and the porous structure obtained by molding the prepreg may be insufficient. When the content of the matrix resin (C) is larger than such a range, the amount of the matrix resin (C) is large relative to the volume of the pores, and there is a case where a defect such as breakage of the carbon fiber substrate occurs during melt impregnation of the matrix resin (C).

The prepreg of the first aspect preferably has a minimum value of tensile strength of 100 MPa or more. In the prepreg of the second aspect, the minimum value of the tensile strength is 100 MPa or more. The minimum value of the tensile strength of the prepreg is preferably 200 MPa or more, more preferably 240 MPa or more, and still more preferably 260 MPa or more and 400 MPa or less.

In general, the tensile strength of the prepreg is strongly affected by the fiber orientation of the contained carbon fiber substrate. Even in the same plane of the prepreg, the fiber orientation is biased, and the tensile strength is higher in the direction in which the number of carbon fibers close to parallel is larger, and the tensile strength is lower in the direction orthogonal thereto. For this reason, even if the tensile strength of the prepreg in one direction is high, the tensile strength in a direction orthogonal to the one direction may be low. From such a viewpoint, in order to obtain a prepreg having high mechanical characteristics isotropically in the in-plane direction, it is desirable to design the tensile strength based on the minimum value.

The minimum value of the tensile strength can be measured using a test piece cut out in four directions obtained by setting any one direction in the in-plane direction of the prepreg as 0° as a reference and further adding 45°, 90°, and -45°. The number of measurements in each direction is n = 5, and the minimum value among all the measured values (n = 20) is taken as the minimum value of the tensile strength.

The prepreg of the present invention preferably has a maximum value of tensile strength of 260 MPa or more, and more preferably 260 MPa or more and 400 MPa or less.

In general, the tensile strength of the prepreg increases as the fiber orientation of the contained carbon fiber substrate is biased and the number of carbon fibers close to parallel to the tensile direction increases. By setting the maximum value of the tensile strength within such a range and designing the tensile strength to be about the same as the minimum value of the tensile strength described above, a prepreg having more isotropic mechanical characteristics can be obtained.

The maximum value of the tensile strength can be measured using a test piece cut out in four directions obtained by setting any one direction in the in-plane direction of the prepreg as 0° as a reference and further adding 45°, 90°, and -45°. The number of measurements in each direction is n = 5, and the maximum value among all the measured values (n = 20) is taken as the maximum value of the tensile strength.

In the prepreg of the present invention, the ratio of the maximum value of the tensile strength to the minimum value of the tensile strength is preferably 1 to 3, more preferably 1 to 1.5, still more preferably 1 to 1.2, and particularly preferably 1 to 1.1. Within such a range, a prepreg having the same mechanical characteristics and excellent isotropy in any in-plane direction of the prepreg can be obtained. Such a value can be obtained by dividing the maximum value of the tensile strength of the prepreg by the minimum value of the tensile strength of the prepreg.

The prepreg of the present invention preferably has an average tensile strength of 100 MPa or more, more preferably 200 MPa or more, still more preferably 240 MPa or more, and particularly preferably 260 MPa or more and 400 MPa or less. Within such a range, a prepreg having isotropic high mechanical characteristics can be obtained. Such an average tensile strength can be measured using a test piece cut out in four directions obtained by setting a certain direction in the in-plane direction of the prepreg as 0° as a reference and further adding 45°, 90°, and -45°. The number of measurements in each direction is n = 5, and the average value of all the measured values (n = 20) is taken as the average tensile strength.

From the viewpoint of obtaining a prepreg having isotropic mechanical characteristics, the variation in in-plane tensile strength is preferably 20% or less, more preferably 10% or less, and still more preferably 5% or less. The variation in the tensile strength is a coefficient of variation (CV) that can be calculated from the average and standard deviation of all the measured values (n = 20) by the following equation, and more specifically, it can be measured by the method described in examples described later.

Variation in tensile strength (%) = [(standard deviation of tensile strength)/(average value of tensile strength)] $\times$ 100

The thickness of the prepreg of the present invention at 400°C is preferably 0.1 mm or more and 5 mm or less, more preferably 0.1 mm or more and 2 mm or less, and still more preferably 1 mm or more and 2 mm or less. The thickness at 400°C corresponds to the thickness after expansion after spring back by the carbon fiber substrate contained in the prepreg. The prepreg can be used for molding according to a desired thickness by stacking a single layer or a plurality of prepregs, and it is preferable to control the thickness of the prepreg at the time of expansion to such a range so that the prepreg can be molded into void bodies having various thicknesses.

The thickness at 400°C can be determined by measuring the thickness of a prepreg heated on a hot plate at 400°C for 5 minutes in a non-contact manner using a laser displacement meter, and calculating the average value thereof.

The prepreg of the first aspect preferably has a thickness variation of 10% or less at 400°C. The prepreg of the second aspect has a thickness variation of 10% or less at 400°C. The thickness variation at 400°C is preferably 8% or less and more preferably 0% or more and 5% or less. When the prepreg of the present invention is heated to 400°C, the matrix resin (C) melts to spring back and expand into the void body. Such expansion is derived from the carbon fiber substrate contained in the prepreg, and variation in thickness after expansion is an index of isotropy in the out-of-plane direction. That is, when the thickness of a certain portion after expansion is large relative to the surrounding, it can be said that the fiber orientation and the fiber concentration of the contained carbon fiber substrate are different. In the case of a prepreg that is isotropic in the out-of-plane direction, the thickness after expansion is entirely equal, and as a result, the variation in the thickness is reduced.

The fiber-reinforced resin molded body and the void body described later are integrally molded articles in which prepregs constituting a preform are bonded between layers. By forming a prepreg having expansibility and small variation in thickness at the time of expansion, it is possible to obtain a fiber-reinforced resin molded body and a void body that avoid generation of gaps between layers and are well in close contact.

The thickness variation at 400°C is a CV value (coefficient of variation) that can be calculated from an average value and a standard deviation of the thickness of a prepreg heated on a hot plate at 400°C for 5 minutes in a non-contact manner using a laser displacement meter, and can be more specifically measured by the method described in examples described later.

Thickness variation (%) at 400°C = [(standard deviation of thickness at 400°C)/(average value of thickness at 400°C)] × 100.

When the prepreg of the present invention is heated to 400°C, the matrix resin (C) having a melting point of 250°C or higher and 400°C or lower, preferably 280°C or higher and 400°C or lower is melted, and the prepreg is brought into an expanded state in which the spring-back force by the carbon fiber substrate is released to the maximum. Such a state makes it possible to grasp the fiber orientation and the density of the fibers of the carbon fiber substrate contained in the prepreg. That is, a portion where the fiber orientation of the carbon fibers (A) is biased and converged into a fiber bundle shape in the prepreg or a portion where the concentration of the carbon fibers (A) is reduced due to breakage of the carbon fiber substrate has a reduced thickness in a state of being expanded at 400°C. Such interspersed portions can be detected as variations in thickness after expansion. Such defects in the carbon fiber substrate are likely to occur during impregnation with the matrix resin (C), and as a method for confirming the defects after prepreg formation, measurement of thickness variation at 400°C is effective.

Defects in the carbon fiber substrate contained in the prepreg affect the tensile strength of the prepreg. Therefore, for example, by reducing the variation in thickness at 400°C to less than 10%, a prepreg having high average tensile strength can be obtained, or a prepreg having both isotropy, that is, the small ratio of the maximum value to the minimum value of tensile strength, and the height of the maximum value of tensile strength can be obtained.

The prepreg of the present invention is preferably manufactured by impregnating the prepreg with the matrix resin (C) in the out-of-plane direction from the viewpoint of a short impregnation distance and excellent productivity. In such a manufacturing method, first, the carbon fiber substrate repels compression associated with impregnation with the matrix resin (C). Upon receiving such a repulsive force, the matrix resin (C) flows in the in-plane direction. In such a resin flow, a force of pulling the carbon fiber substrate in the in-plane direction acts. When a conventional carbon fiber substrate is used, the carbon fiber substrate is broken against the force in the in-plane direction, resulting in molding defects. Such breakage can be prevented by using the carbon fiber substrate of the present invention.

Examples of the method for manufacturing the prepreg include a method for passing through a heating and impregnation step of plasticizing the matrix resin (C) by melting and impregnating pores of the carbon fiber substrate with the plasticized matrix resin (C), and a cooling and solidification step of solidifying the impregnated matrix resin (C). Examples of the method for compositing the matrix resin (C) with the carbon fiber substrate in such a manufacturing method include a method in which the molten matrix resin (C) is directly injected into the carbon fiber substrate, and a method in which the film-like, powdery or fibrous matrix resin (C) is stacked on the carbon fiber substrate and then impregnated by heating and melting. A method for heating and pressurizing a laminate of a film-shaped matrix resin (C) and a carbon fiber substrate is preferable from the viewpoint of suppressing concentration unevenness and bias of fiber orientation of the prepreg and facilitating the manufacturing.

The temperature in the heating and impregnation step is preferably 250°C to 450°C, more preferably 280°C to 400°C, and still more preferably 300°C to 400°C. The pressure in the heating and impregnation step is preferably 0.5 to 20 MPa and more preferably 5 to 15 MPa. By using the carbon fiber substrate of the present invention even under such high temperature and high pressure conditions, a prepreg can be efficiently manufactured.

The time in the heating and impregnation step is preferably 0.5 to 60 minutes and more preferably 5 to 30 minutes. When the heating time is in such a range, the carbon fiber substrate is hard in parallel with the impregnation of the matrix resin (C), so that strong adhesion can be achieved, which is preferable.

The temperature in the cooling and solidification step is preferably 20°C to 250°C and more preferably 100°C to 200°C. The pressure in the cooling and solidification step is preferably 0.5 to 20 MPa and more preferably 5 to 15 MPa. The time in the cooling and solidification step is preferably 0.5 to 60 minutes and more preferably 5 to 30 minutes. Within this range, the prepreg can be efficiently manufactured.

A press molding machine or a double belt press machine can be preferably used as apparatus for realizing such a method for manufacturing the prepreg. The former is used in the case of batch type, and the productivity can be improved by using an intermittent press system in which two or more machines for heating and cooling are arranged in parallel. The latter is used in the case of continuous type, and the continuous productivity is excellent since continuous processing can be easily performed.

The prepreg manufactured by the manufacturing method as exemplified above contains the carbon fiber substrate in a state in which a repulsive force in the out-of-plane direction is stored by being compressed in the out-of-plane direction during impregnation with the matrix resin (C). For this reason, when the matrix resin (C) is melted, the carbon fiber substrate releases the repulsive force to cause a spring-back phenomenon in which the porosity returns to the original porosity. That is, the prepreg has expansibility in the out-of-plane direction, and can be molded into a porous structure.

The prepreg of the present invention expands at an average expansion rate of 150% to 1,000% in the out-of-plane direction when the matrix resin (C) is melted, more preferably 200% to 800%, and still more preferably 450% to 700%. Such a value is an expansion rate that can be calculated by (thickness of porous structure after expansion [mm])/(thickness of prepreg before expansion [mm]) $\times$ 100 [%], and is an arithmetic average value for five samples.

The prepreg of the present invention contains the carbon fiber substrate in a state in which a repulsive force in the out-of-plane direction is stored by being compressed in the out-of-plane direction during impregnation with the matrix resin (C). For this reason, when the matrix resin (C) is melted, the carbon fiber substrate releases the repulsive force to cause a spring-back phenomenon in which the porosity returns to the original thickness. That is, such a prepreg has expansibility in an out-of-plane direction, and can be molded into a void body by taking in air during expansion.

[Porous Structure]

The prepreg of the present invention can be molded into a porous structure by taking advantage of the expandability during heating. That is, the porous structure of the present invention is molded from the prepreg of the present invention.

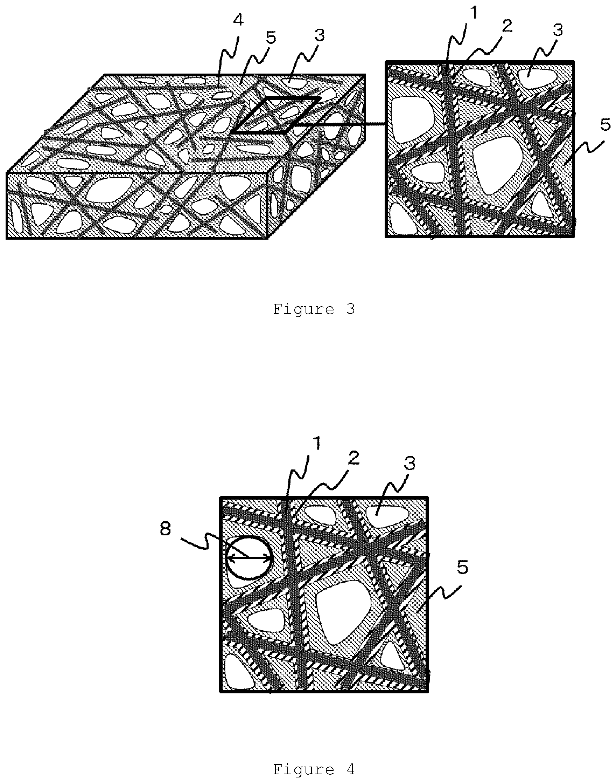

In Fig. 3, a carbon fiber substrate containing a carbon fiber (A) and a resin composition (B) covering the surface of the carbon fiber (A) expands in an out-of-plane direction by a spring-back force thereof, and pores generated as a result of the volume expansion are generated inside the matrix resin (C) as micropores. With such a structure, the weight of the porous structure can be reduced, and the reinforcing effect by the carbon fiber substrate can be exhibited. As described above, by having a structure in which pores in the porous structure are reinforced by the carbon fiber substrate, it is possible to achieve both weight reduction due to an increase in the amount of pores and suppression of deformation of the pores, and to achieve both weight reduction and mechanical characteristics at a high level.

The method for manufacturing the porous structure preferably includes a first step of melting and expanding the matrix resin (C) and a second step of solidifying the matrix resin (C).

The first step is a step of plasticizing the matrix resin (C) by melting and selectively expanding the matrix resin (C) in an out-of-plane direction by a spring-back force of the carbon fiber substrate.

In the first step, the temperature at which the prepreg is heated in order to melt and expand the matrix resin (C) is preferably 250°C to 450°C and more preferably 300°C to 400°C. The pressure in the first step is preferably 0 to 5 MPa and more preferably 0.1 to 3 MPa. The time required for the first step is preferably 0.5 to 60 minutes and more preferably 5 to 30 minutes. Within such a range, the prepreg is efficiently expanded, and a porous structure excellent in the mechanical characteristics is obtained.

The second step is a step of solidifying the matrix resin (C) to fix the carbon fiber substrate in the spring-back state, thereby forming a porous structure.

The temperature in the second step is preferably 20°C to 250°C and more preferably 100°C to 200°C. The pressure in the second step is preferably 0 to 5 MPa and more preferably 0.1 to 3 MPa. The time in the second step is preferably 0.5 to 60 minutes and more preferably 1 to 30 minutes. Within such a range, the expansion rate is controlled, and a porous structure excellent in the mechanical characteristics is obtained.

In the first step and the second step, the thickness of the molded article is preferably adjusted. The method for controlling the thickness is preferably a method for constraining the thickness by using a metal plate or the like, and a method for directly controlling the thickness by adjusting the pressure, from the viewpoint of simplicity of production. A press molding machine or a double belt press machine can be preferably used as apparatus for achieving such a method. The former is used for a batch-type method, and it is possible to improve the productivity by employing an intermittent-type press system including two or more machines for heating and cooling in combination. The latter is for a continuous type, which can easily perform continuous processing and is thus excellent in continuous productivity.

In the present invention, the porous structure has micropores having an average pore diameter of 500 $\mu$m or less. The average pore diameter is preferably 200 $\mu$m or less, more preferably 10 $\mu$m or more and 150 $\mu$m or less, and still more preferably 30 $\mu$m or more and 100 $\mu$m or less. When less than such a range, the weight reduction effect as a porous structure due to expansion may not be sufficient, and at more than such a range, the mechanical characteristics of the porous structure may be deteriorated. Here, the average pore diameter is an arithmetic average value of lengths measured at 50 points obtained by randomly extracting diameter 8 of the largest circle inscribed in the pores in the observation image as in the schematic diagram of the surface of the porous structure shown in Fig. 4. The surface of the porous structure can be observed by, for example, a scanning electron microscope (SEM).

The density of the porous structure of the present invention is preferably 0.01 g/cm$^3$ or more and 0.8 g/cm$^3$ or less, more preferably 0.1 g/cm$^3$ or more and 0.5 g/cm$^3$ or less, and still more preferably 0.2 g/cm$^3$ or more and 0.3 g/cm$^3$ or less. If it is smaller than such a range, the reinforcing effect by the carbon fiber substrate as a porous structure may be insufficient, and if it is larger than such a range, the weight reduction effect as a porous structure may be insufficient. Here,

the density [g/cm$^3$] is a value obtained by dividing the sample mass [g] of the porous structure by the volume [cm$^3$] obtained from the outer periphery of the sample, and can be obtained as an arithmetic average value of results measured for five randomly extracted samples.

In the porous structure of the present invention, the flexural strength at the time of heating to 140°C is preferably 80% or more, more preferably 90% or more, and 100% or less of the flexural strength at 30°C. Such a value can be calculated as "retention of flexural strength at the time of heating to 140°C" by the following equation.

(Retention of flexural strength when heated to 140°C) = (flexural strength at 140°C [MPa])/(flexural strength at 30°C [MPa]) $\times$ 100 [%]

The flexural strength is measured by a three-point flexural test in accordance with JIS K7171 (2016), and is an arithmetic average value for five samples at each level. For temperature control at each level, a thermostatic bath is used, and a test is performed in each of an atmosphere at 30°C and an atmosphere at 140°C.

When the retention ratio of the flexural strength at the time of heating to 140°C is within the above range, a porous structure having excellent heat resistance, which can be applied to structural material applications even in a high temperature environment such as 100°C, can be obtained, which is preferable.

The prepreg of the present invention may be used as a single layer, or may be used as a preform containing the prepreg as a lamination unit. Since the prepreg of the present invention has isotropic mechanical characteristics, it does not require lamination that complements a direction in which strength is low as in quasi-isotropic lamination, and has a feature of high degree of freedom in designing a lamination configuration. Therefore, labor and time in the lamination step can be reduced, and an economic burden can be reduced.

[Preform]

The preform of the present invention contains the prepreg of the present invention as a lamination unit. The number of sheets stacked in the preform is preferably 2 or more and 50 or less and more preferably 2 or more and 10 or less.

The preform can be molded into a "fiber-reinforced resin molded body having voids" (hereinafter, it may be referred to as a "void body") or a "fiber-reinforced resin molded body not including voids".

[Fiber-Reinforced Resin Molded Body]

A void body as one aspect of the fiber-reinforced resin molded body of the present invention is molded by thermally expanding the preform of the present invention, that is, by welding a plurality of stacked prepregs constituting the preform of the present invention in an expanded state.

Examples of the method for manufacturing the void body include a method including a step (1-A) of melting the matrix resin (C) and a step (2-A) of solidifying the matrix resin (C) while controlling the thickness of the molded article. Since the prepreg of the present invention and the preform that is a laminate thereof have expansibility in an out-of-plane direction, it is possible to mold the prepreg into a fiber-reinforced resin molded body having voids therein by molding while controlling the thickness of the molded article.

The step (1-A) is a step of plasticizing the matrix resin (C) by melting and selectively expanding the matrix resin (C) in the out-of-plane direction by the spring-back force of the carbon fiber substrate.

The temperature of the step (1-A) is preferably 250°C to 450°C, more preferably 280°C to 450°C, and still more preferably 300°C to 400°C. The pressure in the step (1-A) is preferably 0 to 5 MPa and more preferably 0.1 to 3 MPa. The time in step (1-A) is preferably 0.5 to 60 minutes and more preferably 5 to 30 minutes. When the condition of step (1-A) is within the above range, the prepreg constituting the preform can be efficiently expanded, and the layers between the prepregs can be firmly adhered to each other.

The step (2-A) is a step of solidifying the matrix resin (C) to fix the carbon fiber substrate in a spring-back state, thereby forming a void body.

The temperature in the step (2-A) is preferably 20°C to 280°C, more preferably 20°C to 250°C, still more preferably 20°C to 200°C, and even more preferably 20°C to 100°C. The pressure in the step (2-A) is preferably 0 to 3 MPa and more preferably 0 to 1 MPa. The time in step (2-A) is preferably 0.5 to 60 minutes and more preferably 5 to 30 minutes. By setting the conditions of the step (2-A) within the above ranges, it is possible to control the expansion rate and obtain a void body excellent in mechanical characteristics and lightweight properties.

In step (2-A), the thickness of the molded article is controlled. The method for controlling the thickness is preferably a method for constraining the thickness by using a metal plate or the like, and a method for directly controlling the thickness by adjusting the pressure, from the viewpoint of simplicity of production.

A press molding machine or a double belt press machine can be preferably used as apparatus for realizing such a method for manufacturing a void body. The productivity can be improved by using an intermittent press system in which two or more machines for heating in step (1-A) and cooling in step (2-A) are arranged in parallel.

The void body of the present invention is preferably produced by expanding the preform used for molding at an average expansion rate of 150% to 1,000% in the out-of-plane direction, more preferably 200% to 800%, and still more preferably 300% to 400%. Such a value is an expansion rate that can be calculated by (thickness of void body [mm])/(thickness of preform [mm]) $\times$ 100 [%], and is an arithmetic average value in five samples. Within such a range, a void body having excellent balance between lightweight properties and mechanical characteristics can be obtained.

The density of the void body in the present invention is preferably 0.01 $g/cm^3$ or more and 0.8 $g/cm^3$ or less, more preferably 0.1 $g/cm^3$ or more and 0.5 $g/cm^3$ or less, and still more preferably 0.3 $g/cm^3$ or more and 0.5 $g/cm^3$ or less. Within such a range, a void body having excellent balance between lightweight properties and mechanical characteristics can be obtained. Here, the density [$g/cm^3$] is a value obtained by dividing the sample mass [g] of the void body by the volume [$cm^3$] obtained from the outer periphery of the sample, and is obtained as an arithmetic average value of results measured for five randomly extracted samples.

A fiber-reinforced resin molded body containing no voids, as one aspect of the fiber-reinforced resin molded body of the present invention, is molded by heating and pressurizing the preform of the present invention, that is, by welding a plurality of stacked prepregs constituting the preform of the present invention in a non-expanded state.

Examples of the method for manufacturing a fiber-reinforced resin molded body containing no voids include a method including a step (1-B) of melting the matrix resin (C) and a step (2-B) of solidifying the matrix resin (C) while pressing the spring-back force of the prepreg. The prepreg of the present invention and the preform that is a laminate thereof have expansibility in an out-of-plane direction, but can be molded into a fiber-reinforced resin molded body in a non-expanded state by molding at a high pressure that suppresses the spring-back force.

The step (1-B) is a step of plasticizing the matrix resin (C) by melting.

The temperature of the step (1-B) is preferably 250°C to 450°C, more preferably 280°C to 450°C, and still more preferably 300°C to 400°C. The pressure in the step (1-B) is preferably 0 to 5 MPa and more preferably 0.1 to 3 MPa. The time in step (1-B) is preferably 0.5 to 60 minutes and more preferably 5 to 30 minutes. When the condition of step (1-B) is within the above range, the layers between the prepregs constituting the preform can be firmly adhered to each other.

Step (2-B) is a step of solidifying the matrix resin (C) while pressing the spring-back force of the prepreg to form a fiber-reinforced resin molded body in which the stacked prepregs are integrated in a non-expanded state.

The temperature in the step (2-B) is preferably 20°C to 280°C, more preferably 20°C to 250°C, still more preferably 20°C to 200°C, and even more preferably 20°C to 100°C. The pressure in the step (2-B) is preferably 3 to 10 MPa and more preferably 5 to 10 MPa. The time in step (2-B) is preferably 0.5 to 60 minutes and more preferably 5 to 30 minutes. By setting the conditions of the step (2-B) within the above range, it is possible to control the expansion rate and obtain a fiber-reinforced resin molded body excellent in the mechanical characteristics.

A press molding machine can be preferably used as apparatus for realizing the method for manufacturing the fiber-reinforced resin molded body. The productivity can be improved by using an intermittent press system in which two or more machines for heating in step (1-B) and cooling in step (2-B) are arranged in parallel.

The fiber-reinforced resin molded body containing no voids has an average expansion rate in the out-of-plane direction of preferably 90% to 150%, more preferably 100% to 120%, and still more preferably 100% to 105% with respect to the preform used for molding. Such a value is an expansion rate that can be calculated by (thickness of fiber-reinforced resin molded body [mm])/(thickness of preform [mm]) $\times$ 100 [%], and is an arithmetic average value for five samples. Within such a range, a fiber-reinforced resin molded body excellent in the mechanical characteristics is obtained.

The density of the fiber-reinforced resin molded body containing no voids is preferably 0.8 $g/cm^3$ or more and 2.0 $g/cm^3$ or less, and more preferably 1.2 $g/cm^3$ or more and 1.5 $g/cm^3$ or less. Within such a range, a fiber-reinforced resin molded body excellent in the mechanical characteristics is obtained. Here, the density [$g/cm^3$] is a value obtained by dividing the sample mass [g] of the fiber-reinforced resin molded body by the volume [$cm^3$] obtained from the outer periphery of the sample, and is obtained as an arithmetic average value of results measured for five randomly extracted samples.

Since the fiber-reinforced resin molded body of the present invention is excellent in the moldability, it is also preferable to mold the fiber-reinforced resin molded body into a corrugated shape or a honeycomb shape. Here, the corrugated shape is a corrugated shape in which a plurality of curved surfaces or bends are continuous. The honeycomb shape is a structure in which a corrugated fiber-reinforced resin molded body is used as a cell wall and a plurality of cell walls are joined by curved surfaces or bent protrusions, and is an aggregate of a large number of hollow columnar cells defined and formed by the cell walls. The shape of the bottom surface of the hollow columnar cell is preferably a triangular shape, a quadrangular shape, a hexagonal shape, or the like, and more preferably a hexagonal shape from the viewpoint of the mechanical characteristics.

[Sandwich Structure]

The sandwich structure of the present invention is formed by integrally sandwiching the fiber-reinforced resin molded body of the present invention as a core member between a pair of skin members. Since the fiber-reinforced resin molded body of the present invention has excellent heat resistance, when the fiber-reinforced resin molded body is used as a core member, deformation is suppressed even in a heating and pressurizing step for joining skin members, and a sandwich structure having excellent dimensional accuracy is obtained. In addition, the sandwich structure of the present invention is excellent in the balance between the lightweight properties and mechanical characteristics. The skin member is not particularly limited, and examples thereof include a prepreg, a fiber-reinforced resin molded body, a metal plate, and a resin plate.

[Aircraft Member]

The prepreg of the present invention, the porous structure or the fiber-reinforced resin molded body using the prepreg, and the sandwich structure can be suitably used for aircraft members such as aircraft, artificial satellites, UAM (Urban air mobility), and drones, automobile members, railway vehicle members, ship members, members for civil engineering and construction, electronic device housings, sporting goods, and the like. In particular, the present invention can be suitably used for an aircraft member required to have both heat resistance and reliability.

Examples

Materials used in examples and comparative examples are as follows.

[PEKK]

A crystalline polyether ether ketone formed of polyether ketone ketone ("KEPSTAN" (registered trademark) 6003 manufactured by Arkema Inc.) and having a melting point of 305°C and the glass transition temperature of 157°C measured in accordance with JIS K7121 (2012) was used.

[PEEK]

Crystalline polyether ether ketone formed of polyether ether ketone ("VICTREX" (registered trademark) PEEK381G manufactured by VICTREX Corporation) and having a melting point of 334°C and a glass transition temperature of 143°C measured in accordance with JIS K7121 (2012) was used.

[Carbon Fiber Non-Woven Fabric]

(CF-1)

A copolymer mainly formed of polyacrylonitrile was subjected to spinning, a firing treatment, and a surface oxidation treatment to provide a carbon fiber bundle having a total of 12,000 monofilaments. The properties of this carbon fiber bundle were a tensile elastic modulus of 220 GPa measured in accordance with JIS R7608 (2007), and a circular cross section with a single fiber diameter of 7 $\mu$m.

The carbon fiber bundle was cut into a length of 6 mm with a cartridge cutter to provide a chopped carbon fiber. A dispersion solution formed of water and a surfactant (polyoxyethylene lauryl ether (trade name) manufactured by NACALAI TESQUE, INC.) and having a concentration of 0.1% by mass was produced, and a carbon fiber non-woven fabric was produced by using this dispersion solution and the chopped carbon fiber. The production apparatus includes a cylindrical container having a diameter of 1,000 mm and having an opening and closing cock at a lower part of the container as a dispersion tank, and a linear transport unit (inclination angle 30°) that connects the dispersion tank and a papermaking tank. A stirrer is attached to an opening at the top surface of the dispersing tank, and the chopped carbon fibers and the dispersion solution (dispersion medium) can be charged from the opening. The papermaking tank includes a mesh conveyor having a 500-mm wide papermaking surface at the bottom and has the mesh conveyor thereof connected to a conveyor capable of delivering a carbon fiber non-woven fabric (papermaking substrate). Papermaking was performed at a carbon fiber concentration in the dispersion of 0.05% by mass. In addition, the papermaking conditions were adjusted so that the carbon fibers were dispersed in a monofilament form and were isotropically dispersed in the in-plane direction. The papermaking substrate was dried in a drying furnace at 200°C for 30 minutes to give a carbon fiber non-woven fabric CF-1 having a thickness of 1.68 mm and a basis weight of 100 g/m$^2$. The thermal mass reduction rate of CF-1 was 0% by mass.

(CF-2)

A carbon fiber non-woven fabric CF-1 was obtained in the same manner as the CF-2 except that the length cut with the cartridge cutter was changed to 3 mm. CF-2, basis weight 100 g/m2, thickness 0.85 mm, and thermal mass reduction rate 0% by mass.

[Polyamic Acid Salt (PAMC)]

A polyamic acid obtained by reacting 4,4'-(4,4'-isopropylidenediphenoxy) bis(phthalic anhydride) as a tetracarboxylic dianhydride with m-phenylenediamine as a diamine compound at a molar ratio of 1:1 was further neutralized with N,N-dimethyl-2-aminoethanol as a trialkylamine to obtain a polyamic acid salt. This compound was diluted with purified water and used as an aqueous solution having a concentration of 10% by mass.

[Polyvinyl alcohol (PVA)]

Polyvinyl alcohol (Polyvinyl alcohol 500, completely saponified, manufactured by FUJIFILM Wako Pure Chemical Corporation) was used. This compound was diluted with purified water and used as an aqueous solution having a concentration of 10% by mass.

[Polyaminoamide (PAA)]

Polyaminoamide was synthesized by reacting 3,3'-diaminobenzidine as an aromatic tetraamine compound with isophthalic acid as a dicarboxylic acid derivative in a molar ratio of 1:1. The polyaminoamidation reaction was carried out in an NMP solvent. This was used as an NMP solution having a concentration of 10% by mass.

The methods for evaluating, for example, the structure and physical properties in the examples and comparative examples are as follows.

[Porosity of Carbon Fiber Substrate]

The porosity of the carbon fiber substrate was a volume ratio of pores in the carbon fiber substrate, and was determined by the following equation from the thickness and basis weight of the carbon fiber substrate and the density of its constituent components. The density here can be determined by JIS K 0061 (2001).

(Porosity of carbon fiber substrate) = {(thickness [m] of carbon fiber substrate) - (basis weight of carbon fiber substrate [g/m2])/ (density of constituent components of carbon fiber substrate [g/m3])}/(thickness of carbon fiber substrate [m]) $\times$ 100 [%].

[Coverage of Resin Composition (B)]

The coverage of the resin composition (B) on the carbon fiber substrate can be determined from the surface oxygen concentration (O/C) by X-ray photoelectron spectroscopy using the following equation.

(Coverage (%) of resin composition (B)) = {(O/C of carbon fiber (A)) - (O/C of carbon fiber substrate)}/{(O/C of carbon fiber (A)) - (O/C of resin composition (B))} $\times$ 100.

As the sample here, in addition to the carbon fiber substrate, a sample obtained by forming the carbon fiber (A) alone before applying the resin composition (B) and a sample obtained by forming the resin composition (B) alone into a film having a thickness of 0.1 mm were also used.

The surface oxygen concentration (O/C) of each sample was determined according to the following procedure. First, a sample was cut into a size of 20 mm in width $\times$ 20 mm in length, placed on a sample support, and measured at a photoelectron escape angle of 45° while the inside of the sample chamber was maintained at $1 \times 10^{-8}$Torr using AlK$\alpha_{1,2}$ as an X-ray source. A binding energy value of the main peak (peak top) of $C_{1s}$ was adjusted to 284.6 eV as a correction value of a peak associated with charging during the measurement. The number of carbon atoms was determined based on the $C_{1s}$ peak area determined by drawing a straight baseline in the range of 282 to 296eV. The number of oxygen atoms was determined based on the $O_{1s}$ peak area determined by drawing a straight baseline in the range of 528 to 540 eV. The surface oxygen concentration (O/C) was determined as an atomic number ratio which is a value obtained by dividing the number of oxygen atoms by the number of carbon atoms. PHI QuanteraII manufactured by ULVAC-PHI, Inc. was used as an X-ray photoelectron spectrometer.

[Tensile Strength of Carbon Fiber Substrate]

A test piece having a width of 50 mm and a length of 150 mm was cut out from the carbon fiber substrate, the test piece was carried at each of both ends by a length of 50 mm, a portion having a length of 50 mm in the remaining central portion was subjected to a tensile test at a test speed of 3 m/min in a room temperature environment. The obtained maximum point load was divided by the width of the test piece to obtain the tensile strength [N/cm], and the arithmetic average value for each level of five samples was used. The tensile test of the carbon fiber substrate was performed on each of a level at which the carbon fiber substrate was heat-treated at 300°C for 5 minutes and a level at which the carbon fiber substrate was not heat-treated. Specifically, as the tensile strength in one direction of the carbon fiber substrate, the tensile strength (Ta) at a level where the heat treatment was performed and the tensile strength (Tao) at a level where the heat treatment was not performed were determined. Further, as the tensile strength in a direction orthogonal to a certain direction, the tensile strength (Tb) at a level where the heat treatment was performed and the tensile strength (Tbo) at a level where the heat treatment was not performed were determined. The change in the tensile strength before and after the heat treatment was determined from the Ta and the Tao according to the following equation.

(Strength after heat treatment with respect to tensile strength before heating) = Ta/Tao $\times$ 100 [%]

The tensile strength ratio (Ta/Tb) after the heat treatment was obtained as a numerical value obtained by dividing the Ta by the Tb, and the tensile strength ratio (Tao/Tbo) before the heat treatment was obtained as a numerical value obtained by dividing the Tao by the Tbo.

[Thermogravimetric/mass spectrometry (TG-MS)]

The mass of the generated gas during heating and the components thereof were analyzed by a thermogravimetric mass spectrometer (TG-MS). Using thermogravimetric analysis (TG), the thermal mass reduction rate of the resin composition (B) was determined by the following equation (1) .

Thermal mass reduction rate (% by mass) = [(W1 - W2)/W1] $\times$ 100 $\cdots$ (1) $\qquad$ (1)

Here, W1 is the sample mass (mg) after the temperature is raised from room temperature to 100°C at 10°C/min and further held isothermally for 30 minutes, and W2 is the sample mass (mg) when the temperature is then raised at 10°C/min and reaches 250°C.

GC/MSQP2010 (manufactured by Shimadzu Corporation) was used for analysis of generated gas by mass spectrometry (MS). Whether the reaction was a dehydration condensation reaction or another thermal decomposition reaction was determined from the presence or absence of moisture in the generated gas.

[Number Average Fiber Length of Carbon Fiber (A)]

400 carbon fibers were randomly extracted from the carbon fiber non-woven fabric as the carbon fibers (A), the lengths of the carbon fibers were measured with an optical microscope, and the number average fiber length (Ln) was determined from the following equation.

```
Number average fiber length (Ln) = (ΣLi)/Nf
```

Li: Measured fiber length (i = 1, 2, 3, ..., n)
Nf: Total number of fiber lengths measured

[Average Expansion Rate of Prepreg in Out-Of-Plane Direction]

The expansion rate of the prepreg in the out-of-plane direction was determined from the thickness of the prepreg and the thickness of the porous structure expanded by heating the prepreg at a temperature obtained by adding 20°C to the melting point of the matrix resin (C) for 5 minutes according to the following equation.

Expansion rate (%) of prepreg in out-of-plane direction = [thickness (mm) of porous structure/thickness (mm) of prepreg] $\times$ 100.

The average expansion rate of the prepreg in the out-of-plane direction was determined as an arithmetic average value of the expansion rates of the prepreg in the out-of-plane direction measured at five randomly extracted locations.

[Density of Prepreg or Porous Structure]

The density (g/cm$^3$) of the prepreg or the porous structure is a value obtained by dividing the sample mass (g) by the volume (cm$^3$) determined from the outer periphery of the sample, and was determined as an arithmetic average value of results measured for five randomly extracted samples.

[Average Pore Diameter of Prepreg or Porous Structure]

The average pore diameter was measured from the diameter of the largest circle inscribed in the pores as in the schematic diagram of the surface of the porous structure shown in Fig. 4. The surface of the prepreg or the porous structure was observed with a scanning electron microscope (SEM), the largest circle inscribed in the pores was drawn in the observation image, and the length of the diameter of this circle was determined as the pore diameter. The average pore diameter was determined as an arithmetic average value of the lengths measured at 50 points obtained by randomly extracting these values.

[Flexural Strength of Porous Structure]

The flexural strength was measured by a three-point bending test in accordance with JIS K7171 (2016) using "Instron" (registered trademark) 5565 universal material testing machine (manufactured by Instron Japan Co., Ltd.) as a testing machine. The environmental temperature at the time of measurement was adjusted by a thermostatic bath, and the flexural strength was measured under each temperature environment of 30°C and 140°C. For the flexural strength, the arithmetic average value in five samples of each level was used. Furthermore, the retention of flexural strength at the time of heating to 140°C was determined by the following equation.

(Retention of flexural strength when heated to 140°C) = (flexural strength at 140°C [MPa])/(flexural strength at 30°C [MPa]) $\times$ 100 [%].

[Tensile Strength of Prepreg]

The tensile strength of the prepreg was measured by a tensile test in accordance with the ISO527-3 method (1995) using "Instron" (registered trademark) model 5565 universal material testing machine (manufactured by Instron Japan) as a testing machine. As to the test pieces, test pieces cut out in four directions including a 0° direction freely set and 45°, 90°, and -45° directions were prepared. The number of measurement was set to n = 5 for each of the directions, and the maximum value and the minimum value, and the average tensile strength, which is the average value thereof, were obtained for all the measured values (n = 20). Further, the standard deviation was obtained, and the CV value (coefficient of variation) that can be calculated by the following equation was defined as the variation in the tensile strength.

Variation in tensile strength (%) = [(standard --> deviation of tensile strength)/(average value of tensile strength)] $\times$ 100

Furthermore, the maximum value of the tensile strength was divided by the minimum value of the tensile strength to obtain a ratio of the maximum value to the minimum value of the tensile strength.

[Thickness of Prepreg at 400°C and Variation Thereof]

A hot plate including a laser displacement meter and capable of non-contact thickness measurement was used. The prepreg was placed on a hot plate, heated to 400°C, and held for 5 minutes, and then the thickness of the prepreg was read. The thickness of the prepreg was read at 20 locations randomly selected, and the average value thereof was taken as the thickness at 400°C. Further, the standard deviation was obtained, and the CV value (coefficient of variation) that can be calculated by the following equation was defined as the thickness variation at 400°C.

Thickness variation (%) at 400°C = [(standard deviation of thickness at 400°C)/(average value of thickness at 400°C)] $\times$ 100.

[Coverage of Binder Resin Composition (D)]

The coverage of the binder resin composition (D) on the carbon fiber substrate can be determined from the surface oxygen concentration (O/C) by X-ray photoelectron spectroscopy using the following equation.

Coverage of binder resin composition (D) (%) = {(O/C of carbon fiber (A) - (O/C of carbon fiber substrate) }/{ (O/C of carbon fiber (A)) - (O/C of binder resin composition (D))} $\times$ 100.

As the sample here, in addition to the carbon fiber substrate, a sample in which the carbon fiber (A) alone before the binder resin composition (D) was applied and the precursor of the binder resin composition (D) alone were heat-treated under the same conditions as in the preparation of the carbon fiber substrate to form a film having a thickness of 0.1 mm was also used.
The surface oxygen concentration (O/C) of each sample was determined in the same manner as in the "coverage of resin composition (B)" described above.

[Thermal Mass Reduction Rate]

Using thermogravimetric analysis (TG), the thermal mass reduction rate of the carbon fiber (A) and the binder resin composition (D) was determined by the following equation.

Thermal mass reduction rate (% by mass) = (M1 - M2)/M1 $\times$ 100

Here, M1 is a sample mass (mg) after isothermal holding at 30°C for 10 minutes, and M2 is a sample mass (mg) when the temperature is then raised at 10°C/min to reach 400°C.
For the sample of the carbon fiber (A), the carbon fiber (A) before the application of the binder resin composition (D) was used, and for the sample of the binder resin composition (D), one obtained by heat-treating a precursor of the binder resin composition (D) alone under the same conditions as in the preparation of the carbon fiber substrate was used for evaluation.

[Glass Transition Temperature of Binder Resin Composition (D)]

The glass transition temperature of the binder resin composition (D) was measured in accordance with JIS K7121 (2012) using differential scanning calorimetry (DSC). As a sample of the binder resin composition (D), a precursor of the binder resin composition (D) alone heat-treated under the same conditions as those at the time of preparing the carbon fiber substrate was used for evaluation.

[Fiber length of carbon fiber (A)]

400 carbon fibers (A) were randomly extracted from the carbon fiber substrate, the lengths of the carbon fibers (A) were measured with an optical microscope, and the number average fiber length (Ln) was determined from the following equation.

$$\text{Number average fiber length (Ln)} = (\Sigma Li)/Nf$$

Li: Measured fiber length (i = 1, 2, 3, ..., n)
Nf: Total number of fiber lengths measured

[Mass Ratio of Carbon Fibers (A) in Carbon Fiber Substrate]

The mass ratio of the carbon fibers (A) in the carbon fiber substrate was determined from the mass of the carbon fiber substrate and the mass of the carbon fibers (A) before the precursor of the binder resin composition was applied by the following equation.

Mass ratio (%) of carbon fibers (A) in carbon fiber substrate = (mass (g) of carbon fiber (A))/(mass (g) of carbon fiber substrate) $\times$ 100.

[Mass Ratio of Carbon Fibers (A) in Prepreg]

The mass ratio of the carbon fibers (A) in the prepreg was determined from the mass of the prepreg and the mass of the carbon fibers (A) used in the prepreg by the following equation.

Mass ratio (%) of carbon fiber (A) in prepreg = (mass (g) of carbon fiber (A))/(mass (g) of prepreg) $\times$ 100.

[Expansion Rate of Fiber-Reinforced Resin Molded Body or Void Body]

The expansion rate of the fiber-reinforced resin molded body or the void body was determined from the thickness of the preform used for molding and the thickness of the fiber-reinforced resin molded body or the void body obtained by molding the preform by the following equation.

(Expansion rate) = (thickness of fiber-reinforced resin molded body or void body [mm])/(thickness of preform [mm]) $\times$ 100 [%]

The thickness of the fiber-reinforced resin molded body or the void body and the thickness of the preform were each determined as an average value of thicknesses measured at five points randomly extracted.

[Density of Fiber-Reinforced Resin Molded Body or Void Body]

The density [g/cm$^3$] of the fiber-reinforced resin molded body or the void body is a value obtained by dividing the sample mass [g] by the volume [cm$^3$] obtained from the outer periphery of the sample, and was obtained as an average value of results measured for five randomly extracted samples.

Hereinafter, carbon fiber substrates, prepregs, and porous structures manufactured in examples and comparative examples of the present invention will be described.

[Example 1]

(Carbon Fiber (A))

As the carbon fiber (A), a carbon fiber non-woven fabric CF-1 cut into a size of 300 mm $\times$ 300 mm was used.

(Resin Composition (B))

PAMC was used as the resin composition (B). This was used as an aqueous solution re-diluted to 1% by mass.

(Carbon Fiber Substrate)

The carbon fiber non-woven fabric was immersed in the aqueous solution. Next, the carbon fiber non-woven fabric was taken out and heated and dried at 100°C for 1 hour to obtain a carbon fiber substrate.

The difference between the mass of the obtained carbon fiber substrate and the mass of the used carbon fiber (A) was the adhesion amount of the resin composition (B), and the adhesion amount was 5 parts by mass with respect to 100 parts by mass of the carbon fiber (A). The coverage of the resin composition (B) was 100%. The results of each evaluation are shown in Table 1.

[Example 2]

By setting the concentration when the resin composition (B) was re-diluted to 3% by mass, the adhesion amount of the resin composition (B) was set to 10 parts by mass. A carbon fiber substrate was obtained in the same manner as in Example 1 except for the above point.

The coverage of the resin composition (B) in this carbon fiber substrate was 100%. The results of each evaluation are shown in Table 1.

[Comparative Example 1]

A carbon fiber substrate was obtained in the same manner as in Example 1 except that PVA was used as the resin composition (B). The PVA coverage of this sample was 100%. The results of each evaluation are shown in Table 1.

[Comparative Example 2]

A carbon fiber non-woven fabric CF-1 was directly used for evaluation without using the resin composition (B). The results of each evaluation are shown in Table 1.

[Example 3]

(Carbon Fiber (A))

A cut carbon fiber non-woven fabric CF-1 similar to that used in Example 1 was used.

(Resin Composition (B))

PAA was used as the resin composition (B). This was used as a 1% by mass re-diluted N-methyl-2-pyrrolidone (NMP).

(Carbon Fiber Substrate)

The carbon fiber non-woven fabric was immersed in the NMP solution. Further, the carbon fiber non-woven fabric was taken out from the NMP solution, and then immersed in water to precipitate the resin composition (B) on the surface of the carbon fiber (A). Then, the carbon fiber non-woven fabric was taken out from the water, and heated and dried at 100°C for 1 hour to obtain a carbon fiber substrate.

The adhesion amount of the resin composition (B) was 5 parts by mass with respect to 100 parts by mass of the carbon fiber (A). The coverage of the resin composition (B) was 100%. The results of each evaluation are shown in Table 1.

[Table 1]

| | | | Example 1 | Example 2 | Comparative Example 1 | Comparative Example 2 | Example 3 |
|---|---|---|---|---|---|---|---|
| Carbon fiber (A) | Type | - | CF-1 | CF-1 | CF-1 | CF-1 | CF-1 |
| | Amount | Parts by mass | 100 | 100 | 100 | 100 | 100 |
| Resin Composition (B) | Type | - | PAMC | PAMC | PVA | - | PAA |
| | Amount | Parts by mass | 5 | 10 | 5 | - | 5 |
| Porosity of carbon fiber substrate | | % | 97 | 96 | 97 | 97 | 97 |
| Tensile strength (Tao) | | N/cm | 8 | 12 | 5 | 2 | 6 |
| Tensile strength (Tbo) | | N/cm | 10 | 16 | 7 | 1 | 7 |
| Tensile strength ratio (Tao/Tbo) | | - | 0.8 | 0.8 | 0.7 | 2.0 | 0.9 |
| Tensile strength (Ta) after heating at 300°C for 5 minutes | | N/cm | 26 | 50 | 2 | 2 | 22 |
| Tensile strength (Tb) after heating at 300°C for 5 minutes | | N/cm | 30 | 52 | 2 | 1 | 24 |
| Tensile strength ratio (Ta/Tb) | | - | 0.9 | 1.0 | 1.0 | 2.0 | 0.9 |
| Tensile strength after heat treatment with respect to tensile strength before heating (Ta/Tao × 100) | | % | 325 | 417 | 40 | 100 | 367 |
| Tensile strength after heat treatment with respect to tensile strength before heating (Tb/Tbo × 100) | | % | 300 | 325 | 29 | 100 | 343 |
| Thermal mass reduction rate of resin composition (B) | | % by mass | 15 | 15 | 3 | - | 11 |
| Reaction during mass reduction of resin composition (B) | | - | Dehydration condensation | Dehydration condensation | Thermal decomposition | - | Dehydration condensation |
| Number average fiber length of carbon fiber (A) | | mm | 6 | 6 | 6 | 6 | 6 |

[Example 1-2]

(Carbon Fiber Substrate)

The carbon fiber substrate obtained in Example 1 was used.

(Matrix Resin (C))

As the matrix resin (C), two resin films made of PEKK and having a basis weight of 150 g/m$^2$ and a size of 300 mm × 300 mm were used.

(Prepreg)

The carbon fiber substrate and the resin film were stacked in the order of resin film/carbon fiber substrate/resin film. The laminate was further sandwiched between flat molds (tooling plates) made of SUS and having a size of 400 mm × 400 mm, and heated and pressure-pressed while being conveyed. The pressing step was first performed by heating at a temperature of 350°C and a pressure of 10 MPa for 10 minutes. Subsequently, cooling and solidification were performed at a temperature of 150°C and a pressure of 10 MPa for 10 minutes to prepare a prepreg having a thickness of 0.28 mm.
No breakage was observed in the carbon fiber substrate in the appearance of the resulting prepreg, and no molding defect was confirmed. The results of each evaluation are shown in Table 2.

[Example 2-2]

Except that the carbon fiber substrate obtained in Example 2 was used, the same procedure as in Example 1-2 was carried out to prepare a prepreg. No breakage was observed in the carbon fiber substrate in the appearance of the resulting prepreg, and no molding defect was confirmed. The results of each evaluation are shown in Table 2.

[Comparative Example 1-2]

Except that the carbon fiber substrate obtained in Comparative Example 1 was used, the same procedure as in Example 1-2 was carried out to prepare a prepreg.
In the obtained prepreg, molding defects due to breakage of the carbon fiber substrate were observed in some places. Table 2 shows the results of the respective evaluations made by selecting places with less breakage.

[Comparative Example 2-2]

An attempt was made to produce a prepreg in the same manner as in Example 1-2 except that the carbon fiber non-woven fabric CF-1 evaluated in Comparative Example 2 itself was used as the carbon fiber substrate. However, during the press molding, the carbon fiber substrate was broken and fragmented, and a prepreg was not obtained. The results are shown in Table 2.

[Example 3-2]

Except that the carbon fiber substrate obtained in Example 3 was used, the same procedure as in Example 1-2 was carried out to prepare a prepreg.
No breakage was observed in the carbon fiber substrate in the appearance of the resulting prepreg, and no molding defect was confirmed. The results of each evaluation are shown in Table 2.

[Table 2]

|  |  |  | Example 1-2 | Example 2-2 | Comparative Example 1-2 | Comparative Example 2-2 | Example 3-2 |
|---|---|---|---|---|---|---|---|
| Carbon fiber substrate | - | - | (Example 1) | (Example 2) | (Comparative example 1) | (Comparative example 2) | (Example 3) |

(continued)

|  |  |  | Example 1-2 | Example 2-2 | Comparative Example 1-2 | Comparative Example 2-2 | Example 3-2 |
|---|---|---|---|---|---|---|---|
| Carbon fiber (A) | Type | - | CF-1 | CF-1 | CF-1 | CF-1 | CF-1 |
|  | Amount | Parts by mass | 100 | 100 | 100 | 100 | 100 |
| Resin composition (B) | Type | - | PAMC | PAMC | PVA | - | PAA |
|  | Amount | Parts by mass | 5 | 10 | 5 | - | 5 |
| Matrix resin (C) | Type | - | PEKK | PEKK | PEKK | PEKK | PEKK |
|  | Amount | Parts by mass | 300 | 300 | 300 | 300 | 300 |
| Density |  | g/cm$^3$ | 1.4 | 1.4 | 1.4 | - | 1.4 |
| Average pore diameter |  | $\mu$m | 0 | 0 | 0 | - | 0 |
| Average expansion rate in out-of-plane direction |  | % | 650 | 650 | 420 | - | 630 |

[Example 1-3]

(Prepreg)

The prepreg obtained in Example 1-2 was used.

(Porous Structure)

Four prepregs having a size of 300 mm $\times$ 300 mm and a thickness of 0.28 mm were stacked and used, and heating and pressure-pressing was performed while an expansion rate was controlled by sandwiching the prepregs together with a 4 mm thick SUS spacer between 400 mm $\times$ 400 mm SUS flat molds (tooling plates). In the pressing step, first, heating was performed at a temperature of 350°C and a pressure of 1 MPa for 10 minutes, and then cooling and solidification was performed at a temperature of 150°C and a pressure of 1 MPa for 10 minutes. The expansion rate was controlled to 360%, and the thickness of the obtained porous structure was 4 mm. The results of each evaluation are shown in Table 3.

[Comparative Example 1-3]

Except that the prepreg obtained in Comparative Example 1-2 was used, the same procedure as in Example 1-3 was carried out to prepare a porous structure. The results of each evaluation are shown in Table 3.

[Example 3-3]

Except that the prepreg obtained in Example 3-2 was used, the same procedure as in Example 1-3 was carried out to prepare a porous structure. The results of each evaluation are shown in Table 3.

[Example 1-4]

(Prepreg)

The prepreg obtained in Example 1-2 was used.

(Porous Structure)

Three prepregs having a size of 300 mm × 300 mm and a thickness of 0.28 mm were stacked and used, and heating and pressure-pressing was performed while an expansion rate was controlled by sandwiching the prepregs together with a 4 mm thick SUS spacer between 400 mm × 400 mm SUS flat molds (tooling plates). In the pressing step, first, heating was performed at a temperature of 350°C and a pressure of 1 MPa for 10 minutes, and then cooling and solidification was performed at a temperature of 150°C and a pressure of 1 MPa for 10 minutes. The expansion rate was controlled to 480%, and the thickness of the obtained porous structure was 4 mm. The results of each evaluation are shown in Table 3.

[Comparative Example 1-4]

Except that the prepreg obtained in Comparative Example 1-2 was used, the same procedure as in Example 1-4 was carried out to prepare a porous structure. However, the expansion rate in the out-of-plane direction was not sufficient, and the intended porous structure having a thickness of 4 mm was not able to be obtained. The results of each evaluation are shown in Table 3.

[Example 3-4]

Except that the prepreg obtained in Example 3-2 was used, the same procedure as in Example 1-4 was carried out to prepare a porous structure. The results of each evaluation are shown in Table 3.

[Table 3]

| | | | Example 1-3 | Comparative Example 1-3 | Example 3-3 | Example 1-4 | Comparative Example 1-4 | Example 3-4 |
|---|---|---|---|---|---|---|---|---|
| Prepreg | - | - | (Example 1-2) | (Comparative Example 1-2) | (Example 3-2) | (Example 1-2) | (Comparative Example 1-2) | (Example 3-2) |
| Carbon fiber (A) | Type | - | CF-1 | CF-1 | CF-1 | CF-1 | CF-1 | CF-1 |
| | Amount | Parts by mass | 100 | 100 | 100 | 100 | 100 | 100 |
| Resin composition (B) | Type | - | PAMC | PVA | PAA | PAMC | PVA | PAA |
| | Amount | Parts by mass | 5 | 5 | 5 | 5 | 5 | 5 |
| Matrix resin (C) | Type | - | PEKK | PEKK | PEKK | PEKK | PEKK | PEKK |
| | Amount | Parts by mass | 300 | 300 | 300 | 300 | 300 | 300 |
| Density | | g/cm$^3$ | 0.39 | 0.39 | 0.39 | 0.29 | - | 0.29 |
| Average pore diameter | | um | 50 | 50 | 48 | 62 | - | 61 |
| Flexural strength at 30°C | | MPa | 53 | 47 | 53 | 30 | - | 30 |
| Flexural strength during heating at 140°C | | MPa | 48 | 32 | 50 | 27 | - | 28 |
| Retention of flexural strength during heating to 140°C | | % | 91 | 68 | 94 | 90 | - | 93 |

[Example 4]

(Carbon Fiber (A))

A cut carbon fiber non-woven fabric CF-1 similar to that used in Example 1 was used.

(Resin Composition (B))

As a solution of the resin composition (B) as a precursor of the binder resin composition (D), the same 1% by mass aqueous solution of PAMC as used in Example 1 was used.

(Carbon Fiber Substrate)

The carbon fiber non-woven fabric was immersed in the aqueous solution. Next, the carbon fiber non-woven fabric was taken out, and heated and dried at 200°C for 1 hour to imidize PAMC, thereby obtaining a carbon fiber substrate in which a polyetherimide resin was attached to the carbon fibers (A) as the binder resin composition (D). The reinforcing fibers (A) had a fiber length of 6 mm, and the coverage of the binder resin composition (D) was 100%. The binder resin composition (D) had a glass transition temperature of 220°C and a thermal mass reduction rate of 1% by mass at 400°C.

(Matrix Resin (C))

As the matrix resin (C), two resin films made of PEKK and having a basis weight of 150 g/m$^2$ and a size of 300 mm $\times$ 300 mm were used.

(Prepreg)

The carbon fiber substrate and the resin film were stacked in the order of resin film/carbon fiber substrate/resin film. The laminate was further sandwiched between flat molds (tooling plates) made of SUS and having a size of 400 mm $\times$ 400 mm, and heated and pressure-pressed while being conveyed. In the pressing step, first, heating was performed at a temperature of 350°C and a pressure of 10 MPa for 10 minutes, and then cooling and solidification was performed at a temperature of 30°C and a pressure of 10 MPa for 10 minutes to prepare a prepreg having a thickness of 0.28 mm. The results of each evaluation are shown in Table 4.

[Example 5]

Except that the concentration of the aqueous solution of PAMC was 3% by mass, the same procedure as in Example 4 was carried out to obtain a prepreg. The carbon fibers (A) had a fiber length of 6 mm, and the coverage of the binder resin composition (D) was 100%. The binder resin composition (D) had a glass transition temperature of 220°C and a thermal mass reduction rate of 1% by mass at 400°C. The thickness of the prepreg was 0.28 mm. The results of each evaluation are shown in Table 4.

[Example 6]

A prepreg was obtained in the same manner as in Example 4 except that CF-2 was used as the carbon fiber (A). The carbon fibers (A) had a fiber length of 3 mm, and the coverage of the binder resin composition (D) was 100%. The binder resin composition (D) had a glass transition temperature of 220°C and a thermal mass reduction rate of 1% by mass at 400°C. The thickness of the prepreg was 0.28 mm. The results of each evaluation are shown in Table 4.

[Example 7]

Except that PEEK was used as the matrix resin (C), the same procedure as in Example 4 was carried out to obtain a prepreg. The carbon fibers (A) had a fiber length of 6 mm, and the coverage of the binder resin composition (D) was 100%. The binder resin composition (D) had a glass transition temperature of 220°C and a thermal mass reduction rate of 1% by mass at 400°C. The thickness of the prepreg was 0.28 mm. The results of each evaluation are shown in Table 4.

[Example 8]

(Carbon Fiber (A))

A cut carbon fiber non-woven fabric CF-1 similar to that used in Example 1 was used.

(Resin Composition (B))

PAA was used as the resin composition (B) as a precursor of the binder resin composition (D). This was used as an NMP solution re-diluted to 1% by mass.

(Carbon Fiber Substrate)

The carbon fiber non-woven fabric was immersed in the NMP solution. Then, the carbon fiber non-woven fabric was taken out, and heated and dried at 200°C for 1 hour to imidazole PAA, thereby obtaining a carbon fiber substrate in which a polybenzimidazole resin was attached to the carbon fibers (A) as the binder resin composition (D). The coverage of the binder resin composition (D) was 100%. The binder resin composition (D) had a glass transition temperature of 425°C and a thermal mass reduction rate of 1% by mass at 400°C.

(Matrix Resin (C))

As the matrix resin (C), two resin films made of PEKK and having a basis weight of 150 g/m$^2$ and a size of 300 mm $\times$ 300 mm were used.

(Prepreg)

The carbon fiber substrate and the resin film were stacked in the order of resin film/carbon fiber substrate/resin film. The laminate was further sandwiched between flat molds (tooling plates) made of SUS and having a size of 400 mm $\times$ 400 mm, and heated and pressure-pressed while being conveyed. In the pressing step, first, heating was performed at a temperature of 350°C and a pressure of 10 MPa for 10 minutes, and then cooling and solidification was performed at a temperature of 30°C and a pressure of 10 MPa for 10 minutes to prepare a prepreg having a thickness of 0.28 mm. The results of each evaluation are shown in Table 4.

[Example 9]

Except that PEEK was used as the matrix resin (C), the same procedure as in Example 8 was carried out to obtain a prepreg. The carbon fibers (A) had a fiber length of 6 mm, and the coverage of the binder resin composition (D) was 100%. The binder resin composition (D) had a glass transition temperature of 425°C and a thermal mass reduction rate of 1% by mass at 400°C. The thickness of the prepreg was 0.28 mm. The results of each evaluation are shown in Table 4.

[Comparative Example 3]

A prepreg was obtained in the same manner as in Example 4 except that PVA was used as the resin composition (B). The coverage of the binder resin composition (D) was 100%. The binder resin composition (D) had a glass transition temperature of 60°C and a thermal mass reduction rate of 60% by mass at 400°C. The thickness of the prepreg was 0.28 mm. The results of each evaluation are shown in Table 4.

[Comparative Example 4]

A prepreg was obtained in the same manner as in Comparative Example 3 except that CF-2 was used as the carbon fiber (A). The carbon fibers (A) had a fiber length of 3 mm, and the coverage of the binder resin composition (D) was 100%. The binder resin composition (D) had a glass transition temperature of 60°C and a thermal mass reduction rate of 60% by mass at 400°C. The thickness of the prepreg was 0.28 mm. The results of each evaluation are shown in Table 4.

[Comparative Example 5]

Except that PEEK was used as the matrix resin (C), the same procedure as in Comparative Example 3 was carried out to obtain a prepreg. The carbon fibers (A) had a fiber length of 6 mm, and the coverage of the binder resin composition (D) was 100%. The binder resin composition (D) had a glass transition temperature of 60°C and a thermal mass reduction rate of 60% by mass at 400°C. The thickness of the prepreg was 0.28 mm. The results of each evaluation are shown in Table 4.

[Table 4]

| | | Example 4 | Example 5 | Example 6 | Example 7 | Example 8 | Example 9 | Comparative Example 3 | Comparative Example 4 | Comparative Example 5 |
|---|---|---|---|---|---|---|---|---|---|---|
| Carbon fiber (A) | - | CF-1 | CF-1 | CF-2 | CF-1 | CF-1 | CF-1 | CF-1 | CF-2 | CF-1 |
| Resin composition (B) | | PAMC | PAMC | PAMC | PAMC | PAA | PAA | PVA | PVA | PVA |
| Matrix Resin (C) | - | PEKK | PEKK | PEKK | PEEK | PEKK | PEEK | PEKK | PEKK | PEEK |
| Mass ratio of carbon fibers (A) in carbon fiber substrate | % | 95 | 91 | 95 | 95 | 95 | 95 | 95 | 95 | 95 |
| Mass ratio of carbon fibers (A) in prepreg | % | 25 | 24 | 25 | 25 | 25 | 25 | 25 | 25 | 25 |
| Average thickness at 400°C | mm | 1.7 | 1.7 | 0.9 | 1.7 | 1.7 | 1.7 | 1.2 | 0.8 | 1.2 |
| Thickness variation at 400°C | % | 3 | 5 | 3 | 5 | 5 | 5 | 16 | 13 | 15 |
| Average tensile strength | MPa | 280 | 260 | 250 | 260 | 250 | 250 | 190 | 180 | 190 |
| Maximum value of tensile strength | MPa | 290 | 280 | 260 | 280 | 270 | 260 | 220 | 200 | 230 |
| Minimum value of tensile strength | MPa | 260 | 240 | 220 | 250 | 230 | 230 | 160 | 140 | 150 |
| Ratio of maximum value to minimum value of tensile strength | - | 1.1 | 1.2 | 1.2 | 1.1 | 1.2 | 1.1 | 1.4 | 1.4 | 1.5 |
| Variation in tensile strength | % | 4 | 6 | 7 | 5 | 7 | 7 | 16 | 19 | 21 |

[Example 10]

(Prepreg)

The prepreg obtained in Example 4 was used.

(Preform)

Four prepregs having a size of 300 mm × 300 mm and a thickness of 0.28 mm were stacked to prepare a preform.

(Fiber-Reinforced Resin Molded Body)

The preform was sandwiched between flat molds (tooling plates) made of SUS and having a size of 400 mm × 400 mm, and heated and pressure-pressed. In the pressing step, first, heating was performed at a temperature of 350°C and a pressure of 3 MPa for 10 minutes, and then cooling and solidification was performed at a temperature of 30°C and a pressure of 5 MPa for 10 minutes. The obtained fiber-reinforced resin molded body was a molded article that had a thickness of 1.12 mm, an expansion rate of 100%, a density of 1.4 g/cm$^3$, and no void.

[Example 11]

(Prepreg)

The prepreg obtained in Example 4 was used.

(Preform)

Four prepregs having a size of 300 mm × 300 mm and a thickness of 0.28 mm were stacked to prepare a preform.

(Fiber-Reinforced Resin Molded Body)

The heating and pressure-pressing was performed while an expansion rate was controlled by sandwiching the preform together with a 4 mm thick SUS spacer between 400 mm × 400 mm SUS flat molds (tooling plates). In the pressing step, first, heating was performed at a temperature of 350°C and a pressure of 3 MPa for 10 minutes, and then cooling and solidification was performed at a temperature of 30°C and a pressure of 1 MPa for 10 minutes to obtain a fiber-reinforced resin molded body (void body) having voids. The obtained void body had a thickness of 4 mm, an expansion rate of 360%, and a density of 0.4 g/cm$^3$. The flexural strength at 30°C was 53 MPa, the flexural strength at 140°C was 48 MPa, and the retention rate of the flexural strength at the time of heating to 140°C was 91%.

[Example 12]

A void body was molded in the same manner as in Example 11 except that the prepreg obtained in Example 8 was used. The obtained void body had a thickness of 4 mm, an expansion rate of 360%, and a density of 0.4 g/cm$^3$. The flexural strength at 30°C was 53 MPa, the flexural strength at 140°C was 50 MPa, and the retention rate of the flexural strength at the time of heating to 140°C was 94%.

[Comparative Example 6]

A void body was molded in the same manner as in Example 11 except that the prepreg obtained in Comparative Example 3 was used. The obtained void body had a thickness of 4 mm, an expansion rate of 360%, and a density of 0.4 g/cm$^3$. The flexural strength at 30°C was 47 MPa, the flexural strength at 140°C was 32 MPa, and the retention rate of the flexural strength at the time of heating to 140°C was 68%.

[Example 13]

(Prepreg)

The prepreg obtained in Example 1-2 was used.

(Preform)

Two prepregs having a length of 300 mm × a width of 300 mm and a thickness of 0.28 mm were stacked to prepare a preform.

(Fiber-Reinforced Resin Molded Body)

The preform was sandwiched between a pair of metal molds having an irregularity shape, and heated and pressure-pressed while the expansion rate was controlled. In the pressing step, first, heating was performed at a temperature of 350°C and a pressure of 3 MPa for 10 minutes, and then cooling and solidification was performed at a temperature of 30°C and a pressure of 1 MPa for 10 minutes. The obtained fiber-reinforced resin molded body had a thickness of 2 mm, an expansion rate of 360%, and a density of 0.4 g/cm$^3$. Furthermore, the obtained fiber-reinforced resin molded body was molded into a corrugated shape by transferring the irregularity shape of the mold, and had a corrugated plate shape in which a fiber-reinforced resin molded body having a length of 10 mm in the length direction was repeatedly bent in the order of a bending angle of 120°/120°/240°/240° when viewed from one surface.

[Example 14]

The corrugated fiber-reinforced resin molded body obtained in Example 13 was cut into a strip shape having a width of 10 mm. These strip-shaped cut pieces were stacked such that the protrusions of adjacent cut pieces faced each other, thereby joining the protrusions. An epoxy resin adhesive (curing type at 120°C) was applied to the joint surface between the protrusions, and the protrusions were joined by heating and pressurizing at a temperature of 120°C and a pressure of 0.1 MPa for 1 hour to obtain a fiber-reinforced resin molded body having a honeycomb structure in which regular hexagonal hollow columnar cells having a side size of 10 mm were arranged.

[Example 15]

(Core Member)

The honeycomb-shaped fiber-reinforced resin molded body obtained in Example 14 was used as a core member.

(Skin Member)

Two prepregs obtained in Example 1-2 were used as a pair of skin members.

(Sandwich Structure)

An epoxy resin adhesive (120°C curing type) was applied to each of opposing surfaces of the two skin members. The core member was sandwiched between these skin members and integrated by heating and pressurizing at a temperature of 120°C and a pressure of 0.1 MPa for 1 hour to form a sandwich structure.

DESCRIPTION OF REFERENCE SIGNS

1: Carbon fiber (A)
2: Resin composition (B) or binder resin composition
3: Pore
4: Carbon fiber (A) covered with resin composition (B) or binder resin composition
5: Matrix resin (C)
6: In-plane direction
7: Out-of-plane direction
8: Pore diameter (diameter of inscribed circle of pore)

**Claims**

**1.** A carbon fiber substrate comprising:

a carbon fiber (A); and

a resin composition (B) covering a surface of the carbon fiber (A),

wherein the carbon fiber (A) forms a non-woven fabric, and a tensile strength after heating at 300°C for 5 minutes is 110% or more of that before the heating.

2. The carbon fiber substrate according to claim 1, wherein the resin composition (B) contains at least one selected from a polyamic acid, a polyamic acid salt, a polyamic acid ester, a polyhydroxyamide, and a polyaminoamide.

3. The carbon fiber substrate according to claim 1 or 2, wherein the resin composition (B) undergoes a dehydration condensation reaction, and a thermal mass reduction rate defined by the following equation (1) in the reaction is 5% to 50% by mass:

Thermal mass reduction rate (% by mass) = $[ (W1 - W2) /W1] \times 100 \cdots (1)$       (1)

wherein, W1 is a sample mass (mg) after the temperature is raised from room temperature to 100°C at 10°C/min and further held isothermally for 30 minutes, and W2 is a sample mass (mg) when the temperature is then raised at 10°C/min and reaches 250°C.

4. The carbon fiber substrate according to any one of claims 1 to 3, wherein a tensile strength ratio (Ta/Tb), determined by dividing a tensile strength (Ta) in an optional direction of the carbon fiber substrate measured at room temperature after heating at 300°C for 5 minutes by a tensile strength (Tb) in an orthogonal direction thereof, is 0.6 to 1.7.

5. The carbon fiber substrate according to any one of claims 1 to 4, wherein a number average fiber length of the carbon fibers (A) is 0.1 to 100 mm.

6. The carbon fiber substrate according to any one of claims 1 to 5, wherein an amount of the resin composition (B) is 0.5 to 30 parts by mass based on 100 parts by mass of the carbon fibers (A).

7. The carbon fiber substrate according to any one of claims 1 to 6, wherein a mass ratio of the carbon fibers (A) in the carbon fiber substrate is 90% or more and 97% or less.

8. A prepreg obtained by impregnating the carbon fiber substrate according to any one of claims 1 to 7, or a substrate derived therefrom with a matrix resin (C).

9. The prepreg according to claim 8, which is obtained by impregnating the matrix resin (C) into a substrate formed of a carbon fiber (A) and a binder resin composition,

wherein the binder resin composition is the resin composition (B) or a composition derived therefrom,

the binder resin composition has a glass transition temperature of 120°C or higher and 450°C or lower,

a melting point of the matrix resin (C) is 250°C or higher and 400°C or lower,

the binder resin composition is present at an interface between the carbon fiber (A) and the matrix resin (C), and

the prepreg satisfies the following conditions (i) and (ii):

(i) A minimum value of a tensile strength is 100 MPa or more;

(ii) A thickness variation at 400°C is 10% or less.

10. A prepreg obtained by impregnating a matrix resin (C) into a substrate formed of a carbon fiber (A) and a binder resin composition (D),

wherein the carbon fibers (A) are discontinuous fibers and form a non-woven fabric,

the binder resin composition (D) has a glass transition temperature of 120°C or higher and 450°C or lower,

a melting point of the matrix resin (C) is 250°C or higher and 400°C or lower,

the binder resin composition (D) is present at an interface between the carbon fiber (A) and the matrix resin (C), and

the prepreg satisfies the following conditions (i) and (ii):

(i) A minimum value of a tensile strength is 100 MPa or more;

(ii) A thickness variation at 400°C is 10% or less.

11. The prepreg according to claim 10, wherein the binder resin composition (D) is a composition containing a polymer having at least one structure selected from an etherimide skeleton, a benzoxazole skeleton, a benzimidazole skeleton, a benzoxazine skeleton, and a cyanate ester skeleton or a derivative thereof.

12. The prepreg according to claim 10 or 11, wherein the binder resin composition (D) contains at least one resin selected form a phenol resin, a urea resin, a melamine resin, a polyimide resin, a polybenzoxazole resin, a polybenzimidazole resin, a bismaleimide resin, a benzoxazine resin, and a cyanate ester resin.

13. The prepreg according to any one of claims 10 to 12, wherein the binder resin composition (D) has a thermal mass reduction rate at 400°C of 5% by mass or less.

14. The prepreg according to any one of claims 8 to 13, wherein the matrix resin (C) contains at least one selected from polyether ketone, polyether ether ketone, and polyether ketone ketone as a main component.

15. The prepreg according to any one of claims 8 to 14, wherein an amount of the matrix resin (C) based on 100 parts by mass of the carbon fibers (A) is 5 to 1,000 parts by mass.

16. The prepreg according to any one of claims 8 to 15, wherein the carbon fibers (A) contain 50% by mass or more of fibers having a fiber length of 2 mm or more and 10 mm or less.

17. The prepreg according to any one of claims 8 to 16, which has a thickness of 0.1 mm or more and 5 mm or less at 400°C.

18. The prepreg according to any one of claims 8 to 17, wherein in-plane tensile strength variation is 20% or less.

19. The prepreg according to any one of claims 8 to 18, wherein a maximum value of tensile strength is 260 MPa or more.

20. The prepreg according to any one of claims 8 to 19, wherein a ratio of a maximum value of the tensile strength to a minimum value of the tensile strength is 1 to 3.

21. The prepreg according to any one of claims 8 to 20, wherein a mass ratio of the carbon fibers (A) in the prepreg is 1% or more and 50% or less.

22. The prepreg according to any one of claims 8 to 21, wherein the prepreg expands at an average expansion rate of 150% to 1,000% in the out-of-plane direction when the matrix resin (C) is melted.

23. A porous structure which is molded from the prepreg according to any one of claims 8 to 22.

24. The porous structure according to claim 23, wherein flexural strength at the time of heating to 140°C is 80% or more of flexural strength at 30°C.

25. A method for manufacturing the porous structure according to claim 23 or 24, the method comprising:

   a first step of melting and expanding the matrix resin (C); and
   a second step of solidifying the matrix resin (C).

26. A preform comprising the prepreg according to any one of claims 8 to 22 as a lamination unit.

27. A fiber-reinforced resin molded body obtained by molding the preform according to claim 26 by heating and pressurizing the preform.

28. A fiber-reinforced resin molded body comprising: voids formed by thermally expanding the preform according to claim 26.

29. The fiber-reinforced resin molded body according to claim 27 or 28, which has a corrugated shape or a honeycomb shape.

30. A sandwich structure obtained by integrally sandwiching the fiber-reinforced resin molded body according to any one of claims 27 to 29 as a core member between a pair of skin members.

31. An aircraft member comprising:

the prepreg according to any one of claim 8 to 22;
the porous structure according to claim 23 or 24;
the fiber-reinforced resin molded body according to any one of claim 27 to 29; or
the sandwich structure according to claim 30.

Figure 1

Figure 2

Figure 3

Figure 4

<table>
<tr><td colspan="2" align="center">**INTERNATIONAL SEARCH REPORT**</td><td colspan="2">International application No.<br><br>**PCT/JP2023/009036**</td></tr>
<tr><td colspan="4">**A.    CLASSIFICATION OF SUBJECT MATTER**<br><br>*D06M 15/59*(2006.01)i; *C08J 5/24*(2006.01)i; *D06M 101/40*(2006.01)n<br>FI:    D06M15/59; C08J5/24; D06M101:40<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br><br>D06M15/59; C08J5/24; D06M101/40</td></tr>
<tr><td colspan="4">Documentation searched other than minimum documentation to the extent that such documents are included in the fields searched<br><br>Published examined utility model applications of Japan 1922-1996<br>Published unexamined utility model applications of Japan 1971-2023<br>Registered utility model specifications of Japan 1996-2023<br>Published registered utility model applications of Japan 1994-2023</td></tr>
<tr><td colspan="4">Electronic data base consulted during the international search (name of data base and, where practicable, search terms used)</td></tr>
<tr><td colspan="4">**C.    DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td align="center">A</td><td colspan="2">WO 2010/013645 A1 (TORAY INDUSTRIES, INC.) 04 February 2010 (2010-02-04)</td><td align="center">1-31</td></tr>
<tr><td align="center">A</td><td colspan="2">US 2020/0123708 A1 (SABIC GLOBAL TECHNOLOGIES B.V.) 23 April 2020 (2020-04-23)</td><td align="center">1-31</td></tr>
<tr><td align="center">A</td><td colspan="2">WO 2020/137442 A1 (KURASHIKI BOSEKI KK  ) 02 July 2020 (2020-07-02)</td><td align="center">1-31</td></tr>
</table>

☐ Further documents are listed in the continuation of Box C.          ☑ See patent family annex.

| | |
|---|---|
| \*      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
| Date of the actual completion of the international search<br><br>**17 May 2023** | Date of mailing of the international search report<br><br>**30 May 2023** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

## INTERNATIONAL SEARCH REPORT
### Information on patent family members

International application No.

**PCT/JP2023/009036**

| Patent document cited in search report | | | Publication date (day/month/year) | Patent family member(s) | | | Publication date (day/month/year) |
|---|---|---|---|---|---|---|---|
| WO | 2010/013645 | A1 | 04 February 2010 | US | 2011/0143110 | A1 | |
| | | | | EP | 2314642 | A1 | |
| | | | | CN | 102056971 | A | |
| | | | | KR | 10-2011-0055482 | A | |
| US | 2020/0123708 | A1 | 23 April 2020 | WO | 2019/005462 | A1 | |
| | | | | CN | 110799689 | A | |
| | | | | KR | 10-2020-0024833 | A | |
| WO | 2020/137442 | A1 | 02 July 2020 | US | 2022/0205157 | A1 | |
| | | | | EP | 3904032 | A1 | |
| | | | | CN | 113226681 | A | |
| | | | | KR | 10-2021-0107669 | A | |

Form PCT/ISA/210 (patent family annex) (January 2015)

**REFERENCES CITED IN THE DESCRIPTION**

**Patent documents cited in the description**

- JP 2010013645 A
- JP 2002990 B

- JP 2014500912 A